(19) Europäisches Patentamt
European Patent Office
Office européen des brevets

(11) **EP 2 657 080 B1**

(12) **EUROPEAN PATENT SPECIFICATION**

(45) Date of publication and mention
of the grant of the patent:
**05.04.2017 Bulletin 2017/14**

(51) Int Cl.:
***B60Q 1/18*** *(2006.01)*          ***B60Q 1/12*** *(2006.01)*
***B62J 6/02*** *(2006.01)*

(21) Application number: **13164320.7**

(22) Date of filing: **18.04.2013**

(54) **Sub headlight unit and sub headlight system for use in vehicle that leans into turns, and vehicle that leans into turns, and method to control a sub headlight unit**

Unterscheinwerfereinheit und Unterscheinwerfersystem zur Verwendung in einem Fahrzeug, das sich in Kurven lehnt, sowie Fahrzeug, das sich in Kurven lehnt

Unité et système de phare secondaire pour utilisation dans un véhicule qui penche dans les virages et ledit véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2012 JP 2012104063**

(43) Date of publication of application:
**30.10.2013 Bulletin 2013/44**

(73) Proprietor: **Yamaha Hatsudoki Kabushiki Kaisha Iwata-shi, Shizuoka 438-8501 (JP)**

(72) Inventors:
• **Kino, Yasuhiko**
**Iwata-shi, Shizuoka 438-8501 (JP)**
• **Ooba, Junichi**
**Iwata-shi, Shizuoka 438-8501 (JP)**
• **Kosugi, Makoto**
**Iwata-shi, Shizuoka 438-8501 (JP)**

(74) Representative: **Grünecker Patent- und Rechtsanwälte**
**PartG mbB**
**Leopoldstraße 4**
**80802 München (DE)**

(56) References cited:
**EP-A1- 1 659 028          JP-A- 2008 001 305**
**US-A1- 2005 180 139     US-A1- 2005 270 785**
**US-A1- 2010 213 872**

EP 2 657 080 B1

**Description**

The present invention relates to a sub headlight unit and a sub headlight system for use in a vehicle that leans into turns, and to a vehicle that leans into turns.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a rider operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the left and right in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed in which, in addition to a main headlight that illuminates an area ahead of the vehicle, a pair of right and left sub headlights that are turned on depending on the magnitude of a lean angle (angle of inclination of a vehicle body to the inner side of a curve relative to an upright state thereof) are provided as the headlight (WO 2010/061651). Each of the sub headlights includes two light sources (filaments). In the vehicle disclosed in WO 2010/061651, when the lean angle increases and reaches a predetermined value, one of the two light sources included in the sub headlight is turned on. When the lean angle further increases and reaches a predetermined value, the two light sources are turned on.

Such a vehicle is known from WO 2010/061651. A similar vehicle is known from US2005/0270785.

A situation where the vehicle corners or turns at an intersection is not always the same, and there are a wide variety of running scenes. The present inventors have studied cases where the vehicle disclosed in WO 2010/061651 runs in a wide variety of scenes, and found out the following problems.

In the vehicle disclosed in WO 2010/061651, when the vehicle corners or turns at an intersection, the illumination range of the sub headlight within a rider's field of view largely changes, which sometimes causes the rider to feel uncomfortable.

For example, even on a road having a curve with the same radius, some vehicles pass through the curve at a relatively low speed, and other vehicles pass through the curve at a relatively high speed. At this time, the lean angle of the vehicle passing at the high speed is changed more rapidly than the lean angle of the vehicle passing at the low speed. That is, even though a vehicle passes through a road having a curve with the same radius, the amount of change in the lean angle per unit time varies depending on the vehicle speed.

Furthermore, even when the vehicle is running at the same speed, the lean angle is gently changed in a curve with a large radius while the lean angle is rapidly changed in a curve with a small radius. Accordingly, for example, in a case of continuously passing through a plurality of curves having different radii during touring on a mountain road, the amount of change in the lean angle per unit time changes in each curve, even though the speed does not change so much.

In the vehicle disclosed in WO 2010/061651, the two light sources of the sub headlight are sequentially turned on in accordance with an increase in the lean angle. Accordingly, at a time point when a light source is turned on, an illumination range of this light source is additionally provided, which can suppress a reduction in the illumination range which may be caused by inclination of the vehicle.

Here, in accordance with an increase in the lean angle of the vehicle, an illumination range of a sub headlight produced on a road surface continuously approaches to the vehicle, and accordingly a cut-off line of the sub headlight also approaches to the vehicle. The speed of movement of the cut-off line of the sub headlight light source varies depending on the amount of change in the lean angle per unit time. In other words, the speed of movement of the cut-off line varies depending on a running scene.

Therefore, in a case where the speed of movement of the cut-off line largely changes upon each turn in a curve or in a case where the speed of movement of the cut-off line increases, the rider may feel uncomfortable.

The present invention has been made in view of the problems described above, and an object of the present invention is to prevent a rider from feeling uncomfortable about a change in an illumination range in the course of an increase or decrease in the lean angle of a vehicle body.

To solve the problems described above, the present invention adopts the following configurations.

(1) A sub headlight unit for use in a vehicle that leans into turns, wherein
the sub headlight unit includes at least a sub headlight light source that illuminates, at one side with respect to a width direction of the vehicle, an area ahead and outward of the vehicle with respect to the width direction of the vehicle, the brightness of the sub headlight light source changes in accordance with a lean angle of the vehicle,
when the lean angle of the vehicle leaning to the one side with respect to the width direction of the vehicle reaches a reference value that is set for the sub headlight light source, the sub headlight light source lights up with a first brightness, and in a period from when the lean angle of the vehicle reaches a lower value that is less than the reference value to when the lean angle of the vehicle reaches the reference value, the sub headlight light source starts and lights up with a brightness lower than the first brightness and the sub headlight light unit is not lightened up for lean angle values lower than the lower value, the lower value being less than the reference value.

In a state where a main headlight light source or a sub headlight light source (hereinafter also referred to as a first headlight light source) included in the vehicle has been already turned on, when the lean angle increases, an illumination range produced on a road surface is reduced so that a cut-off line of the first headlight light source that has been already turned on approaches to the vehicle. Therefore, the illumination range of the first headlight light source gradually moves away from a position a rider desires to see toward the vehicle.

In a configuration with a plurality of sub headlight light sources, under such a situation, at a time point when the lean angle reaches the lower value that is less than the reference value before the lean angle reaches the reference value of a second sub headlight light source that will be turned on next, the second sub headlight light source lights up with a brightness lower than the first brightness. As a result, an illumination range of the second sub headlight light source that is currently turned on partially overlaps the cut-off line of the first headlight light source that has been previously turned on. Here, the brightness of the second sub headlight light source is lower than the first brightness. Therefore, a situation where the turn-on of the second sub headlight makes the rider feel uncomfortable is suppressed.

Then, along with an increase in the lean angle, the illumination range of the first headlight light source is reduced so that the cut-off line approaches to the vehicle, and when the lean angle reaches the reference value that is set for the second headlight light source, the second headlight light source lights up with the first brightness. Accordingly, when the illumination range of the first headlight light source is moving away from the position the rider desires to see, the illumination range of the second headlight light source can spread over the position the rider desires to see.

As a result, the cut-off line of the second headlight light source is more conspicuous to the rider than the cut-off line of the first headlight light source. An illumination range having a predetermined illuminance is enlarged along with an increase in the brightness of the second headlight light source from the brightness lower than the first brightness to the first brightness. Therefore, an effect of reducing the speed of approach of the cut-off line to the vehicle is exerted. Since the effect of reducing the speed of movement of the cut-off line is exerted, a change in the speed of movement of the cut-off line which occurs in each turn can be made small. This enables suppression of an uncomfortable feeling, which may otherwise be given to the rider.

Since a reduction in the illumination range of the headlight is suppressed, occurrence of a situation where the position the rider desires to see is not sufficiently covered by the illumination range of the headlight can be suppressed. This enables suppression of an uncomfortable feeling, which may otherwise be given to the rider.

Here, in order to suppress the speed of movement of the cut-off line, it is conceivable to gradually increase the brightness of the headlight light source in accordance with a length of time having elapsed since the lean angle reached the reference value. In this case, however, a change in the brightness of the headlight light source is linked to time. Accordingly, the responsiveness to a change in the lean angle decreases, and there is a risk that a time period may occur during which the position the rider desires to see is not coincident with the illumination range of the headlight.

In this respect, in the configuration of (1), the brightness of the headlight light source changes in accordance with the lean angle of the vehicle. This can reduce a change in the speed of movement of the cut-off line which occurs in each turn while ensuring the responsiveness to a change in the lean angle. This also enables suppression of occurrence of a time period during which the position the rider desires to see is not sufficiently covered by the illumination range of the headlight.

(2) The sub headlight unit according to (1), wherein
when the lean angle of the vehicle reaches the lower value that is set for the sub headlight light source, an illumination range of the sub headlight light source contains a space above a horizontal line,
when the lean angle of the vehicle reaches the reference value that is set for the sub headlight light source, the illumination range of the sub headlight light source is located in a space below the horizontal line.

In a configuration of (2), when the lean angle of the vehicle reaches the reference value so that the sub headlight light source lights up with the first brightness, the illumination range of the sub headlight light source is located in a space below the horizontal line. Accordingly, occurrence of glare can be suppressed. When the lean angle reaches the lower value, the illumination range of the sub headlight light source contains a space above the horizontal line. However, the sub headlight light source lights up with a brightness lower than the first brightness, and therefore occurrence of glare can be suppressed.

(3) The sub headlight unit according to (1) or (2), wherein
a cut-off line of the sub headlight light source obtained when the lean angle of the vehicle reaches the reference value that is set for the sub headlight light source is closer to horizontal than the cut-off line of the sub headlight light source obtained when the lean angle of the vehicle reaches the lower value that is set for the sub headlight light source.

In a configuration of (3), when the lean angle reaches the reference value, the cut-off line of the sub headlight light source is close to horizontal. Accordingly, when the headlight light source lights up with the first brightness, a wide illumination range can be ensured on a road surface, with prevention of glare.

(4) The sub headlight unit according to any one of (1) to (3), wherein the sub headlight unit comprises a plurality of the sub headlight light sources,
the reference value and the lower value are individually set for each of the sub headlight light sources.

In a configuration of (4), along with an increase in the lean angle, the sub headlight light sources, sequentially from the one having the smallest reference value set therefor, lights up with the brightness lower than the first brightness and then lights up with the first brightness. Sequentially changing the brightness of each sub headlight light source in this manner can slow the speed of movement of the cut-off line while suppressing a reduction in the illumination range of the sub headlight light source in accordance with the increase in the lean angle.

(5) The sub headlight unit according to (4), wherein the reference value of one sub headlight light source is equal to or smaller than the lower value of another sub headlight light source for which the next greatest reference value after that of the one sub headlight light source is set.

There is the upper limit in an output of the headlight light source, and energy such as fuel loaded on the vehicle is also limited. Therefore, it is preferable to make effective use of the headlight light source based on the relationship between the energy efficiency and the illumination range. Even if the second headlight light source lights up with a brightness lower than the first brightness before the first headlight light source lights up with the first brightness, it is difficult to fully enjoy the advantage of compensation of the illumination range by the second headlight light source, because the brightness of the first headlight light source will be subsequently increased. Therefore, in a configuration of (5), in the course of an increase in the lean angle, the second headlight light source is caused to light up with a brightness lower than the first brightness after the first headlight light source lights up with the first brightness. This allows an effective use of the respective headlight light sources.

Here, the first headlight light source means such a headlight light source that the reference value of the lean angle set therefor is the first to be reached in the course of the lean angle increasing and reaching the reference value of the headlight light source. The second headlight light source means such a headlight light source that the reference value of the lean angle set therefor is the next to be reached after the reference value of the first headlight light source is reached.

(6) The sub headlight unit according to any one of (1) to (5), wherein
an optical axis of the sub headlight light source is fixed,
the sub headlight light source whose optical axis is fixed lights up with the first brightness when the lean angle of the vehicle reaches the reference value that is set for the sub headlight light source, and lights up with a brightness lower than the first brightness in the period from when the lean angle of the vehicle reaches the lower value that is less than the reference value to when the lean angle of the vehicle reaches the reference value.

In order to suppress the speed of movement of the cut-off line, it is conceivable to provide a movable mechanism and a movable member for physically changing the orientation of the light source and to control the movable mechanism and the movable member in accordance with an increase in the lean angle, thereby adjusting the orientation of the light source. However, to provide the movable mechanism and the movable member, it is necessary that a space for them is ensured in the vehicle. Therefore, this method is not suitable for a relatively small vehicle.

In this respect, in a configuration of (6), the optical axis of the headlight light source is fixed. Therefore, any movable mechanism and any movable member for moving the optical axis of the headlight light source are not required. This enables avoidance of an increase in the size of the sub headlight unit.

(7) A sub headlight system for use in a vehicle that leans into turns,
the sub headlight system including:

the sub headlight unit according to any one of (1) to (6);
a control part that changes the brightness of the sub headlight light source in accordance with the lean angle of the vehicle; and
a detection part that detects a variable available for obtaining the lean angle of the vehicle,
the control part causes the sub headlight light source to light up with the first brightness, and cause the sub headlight light source to light up with a brightness lower the first brightness.

In a configuration of (7), an AFS (Adaptive Front-Lighting System) is achieved that enables suppression of occurrence of a situation where the rider feels uncomfortable about a change in the illumination range.

(8) The sub headlight system according to (7), wherein
the sub headlight system includes a voltage detector that detects a supply voltage value of a voltage that is supplied from a battery provided in the vehicle to the sub headlight light source,
the control part performs:

a comparison process for comparing the supply voltage value detected by the voltage detector against a reference voltage value of the battery; and
an adjustment process for adjusting, based on a result of the comparison, the brightness of the sub headlight light source that changes in accordance with the lean angle of the vehicle.

A configuration of (8) can suppress a change in the illumination range of the sub headlight light source which is caused by a variation in the supply voltage supplied from the battery to the sub headlight light source. Accordingly, occurrence of glare can be suppressed.

The present invention can also adopt the following configurations.

(8-1) The sub headlight system according to (7), wherein
the sub headlight system includes a temperature detector that detects the temperature of the sub headlight light source or the vicinity of the sub headlight light source,
the control part performs an adjustment process for adjusting, based on the temperature detected by the temperature detector, the brightness of the sub headlight light source that changes in accordance with the lean angle of the vehicle.

A configuration of (8-1) can correct a reduction in the brightness of the sub headlight light source (for example, an LED) caused by a temperature rise.

(8-2) The sub headlight system according to (7), wherein
the control part performs:

a distance information acquisition process for acquiring distance information indicating a distance the vehicle has traveled; and
an adjustment process for adjusting, based on the distance information acquired in the distance information acquisition process, the brightness of the sub headlight light source that changes in accordance with the lean angle of the vehicle.

(8-3) The sub headlight system according to (7), wherein
the control part performs:

a time information acquisition process for acquiring time information indicating a period of use of the vehicle or the sub headlight light source; and

an adjustment process for adjusting, based on the time information acquired in the time information acquisition process, the brightness of the sub headlight light source that changes in accordance with the lean angle of the vehicle.

A configuration of (8-2) or (8-3) can correct a reduction in the brightness of the sub headlight light source caused by a long-term use.

(9) The sub headlight system according to (8), wherein

when the lean angle of the vehicle is in a range of at least the lower value and less than the reference value, the control part performs the adjustment process, while when the lean angle of the vehicle is out of the range, the control part does not perform the adjustment process.

In a configuration of (9), when the lean angle of the vehicle is out of the range, the adjustment process is not performed. Accordingly, at a time of causing the sub headlight light source to light up with a relatively high output in accordance with the lean angle, the output can be made without limitation because the adjustment process is not performed. Therefore, a wide illumination range can be ensured.

The configuration of (9) is also adoptable in the sub headlight system according to any one of (8-1) to (8-3) described above.

(10) A vehicle that leans into turns,

the vehicle including the system according to any one of (7) to (9).

A configuration of (10) enables suppression of occurrence of a situation where the rider feels uncomfortable about a change in the illumination range.

(11) A method to control a sub headlight unit for use in a vehicle that leans into turns, with at least

a sub headlight light source, wherein the sub headlight light source illuminates, at one side with respect to a width direction of the vehicle, an area ahead and outward of the vehicle with respect to the width direction of the vehicle, the brightness of the sub headlight light source changes in accordance with a lean angle of the vehicle,

when the lean angle of the vehicle leaning to the one side with respect to the width direction of the vehicle reaches a reference value that is set for the sub headlight light source, the sub headlight light source lights up with a first brightness, and in a period from when the lean angle of the vehicle reaches a lower value that is less than the reference value to when the lean angle of the vehicle reaches the reference value, the sub headlight light source lights up with a brightness lower than the first brightness and the sub headlight light source is not lightened up.

(12) A method to control a sub headlight unit for use in a vehicle that leans into turns, with a sub headlight light source according to (11), wherein

when the lean angle of the vehicle reaches the lower value that is set for the sub headlight light source, an illumination range of the sub headlight light source contains a space above a horizontal line,

when the lean angle of the vehicle reaches the reference value that is set for the sub headlight light source, the illumination range of the sub headlight light source is located in a space below the horizontal line.

(13) A method to control a sub headlight unit for use in a vehicle that leans into turns, with a sub headlight light source according to (12), wherein

a cut-off line of the sub headlight light source obtained when the lean angle of the vehicle reaches the reference value that is set for the sub headlight light source is closer to horizontal than the cut-off line of the sub headlight light source obtained when the lean angle of the vehicle reaches the lower value that is set for the sub headlight light source.

(14) A method to control a sub headlight unit for use in a vehicle that leans into turns, with a sub headlight light source according to (13), wherein

the reference value and the lower value are individually set for each of a plurality of sub headlight light sources, the reference value of one sub headlight light source is equal to or smaller than the lower value of another sub headlight light source for which the next greatest reference value after that of the one sub headlight light source is set.

(15) A method to control a sub headlight unit for use in a vehicle that leans into turns, with a sub headlight light source according to (14), wherein

an optical axis of the sub headlight light source is fixed,

the sub headlight light source whose optical axis is fixed lights up with the first brightness when the lean angle of the vehicle reaches the reference value that is set for the sub headlight light source, and lights up with a brightness lower than the first brightness in the period from when the lean angle of the vehicle reaches the lower value that is less than the reference value to when the lean angle of the vehicle reaches the reference value.

Here, in the present invention, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. In the present invention, the illumination range means an illumination range having a predetermined illuminance, and this predetermined illuminance is not particularly limited. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-surface illuminance (Lx)} = \text{Screen Illuminance (Lx)} \times [(\text{Distance between D and F (m)}) / (\text{Distance between D and E (m)})]^2 \qquad \ldots (I)$$

These and other objects, features, aspects and advantages of the present invention will become apparent to those skilled in the art from the following detailed description, which, taken in conjunction with the accompanying drawings, discloses some embodiments of the present invention.

The present invention enables suppression of occurrence of a situation where a rider feels uncomfortable about a change in an illumination range.

[FIG. 1] A front elevational view schematically showing a motorcycle according to a first embodiment of the present invention.

[FIG. 2] A block diagram showing a basic configuration concerning sub headlight light sources of the motorcycle shown in FIG. 1.

[FIG. 3] A front elevational view schematically showing optical axes and cut-off lines of the sub headlight light sources of the motorcycle in an upright state.

[FIG. 4] A chart showing the relationship between a lean angle of the motorcycle and the brightnesses of the sub headlight light sources according to the first embodiment of the present invention.

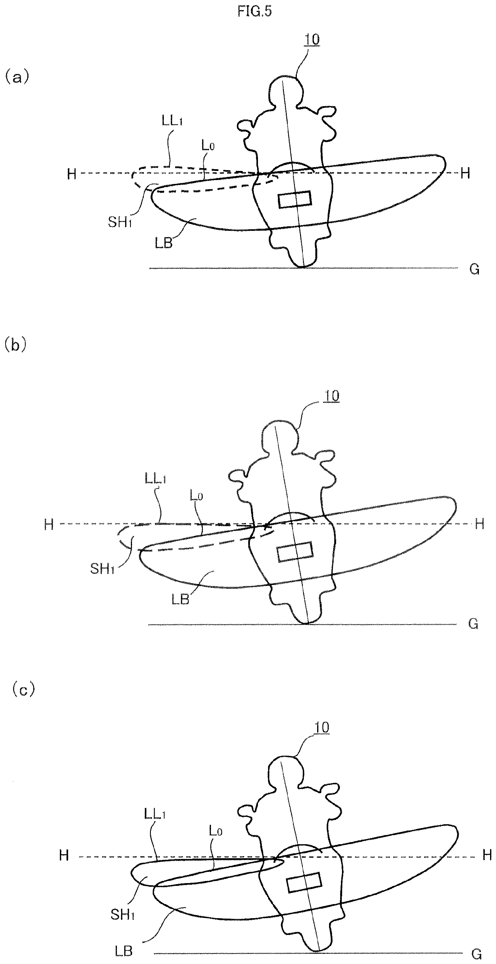

[FIG. 5] (a) is a diagram schematically showing a screen light distribution obtained when the lean angle of the motorcycle takes a value that is in the range from a lower value $T_1$ to a reference value $K_1$ and is relatively close to the lower value $T_1$; (b) is a diagram schematically showing a screen light distribution obtained when the lean angle of the motorcycle takes a value that is in the range from the lower value $T_1$ to the reference value $K_1$ and is greater than the lean angle shown in (a); and (c) is a diagram schematically showing a screen light distribution obtained when the lean angle of the motorcycle takes the reference value $K_1$.

[FIG. 6] (a) is a diagram schematically showing a screen light distribution obtained when the lean angle of the motorcycle takes an upper value $U_1$; (b) is a diagram schematically showing a screen light distribution obtained when the lean angle of the motorcycle takes a value that is in the range from a lower value $T_2$ to a reference value $K_2$; and (c) is a diagram schematically showing a screen light distribution obtained when the lean angle of the motorcycle takes the reference value $K_2$.

[FIG. 7] (a) is a diagram schematically showing a screen light distribution obtained when the lean angle of the motorcycle takes a value that is in the range from a lower value $T_3$ to a reference value $K_3$; and (b) is a diagram schematically showing a screen light distribution obtained when the lean angle of the motorcycle takes the reference value $K_3$.

[FIG. 8] A diagram illustrating a light distribution, schematically showing an illumination range of a headlight produced on a road surface at a time when the lean angle of the motorcycle takes a value that is in the range from the lower value $T_1$ to the reference value $K_1$ and is relatively close to the lower value $T_1$.

[FIG. 9] A diagram illustrating a light distribution, schematically showing an illumination range of the headlight produced on a road surface at a time when the lean angle of the motorcycle takes a value that is in the range from the lower value $T_1$ to the reference value $K_1$ and is greater than the lean angle shown in FIG. 8.

[FIG. 10] A diagram illustrating a light distribution, schematically showing an illumination range of the headlight produced on a road surface at a time when the lean angle of the motorcycle takes the reference value $K_1$.

[FIG. 11] A diagram illustrating a light distribution, schematically showing an illumination range of the headlight produced on a road surface at a time when the lean angle of the motorcycle takes the upper value $U_1$.

[FIG. 12] A diagram illustrating a light distribution, schematically showing an illumination range of the headlight produced on a road surface at a time when the lean angle of the motorcycle takes a value that is in the range from the lower value $T_2$ to the reference value $K_2$.

[FIG. 13] A diagram illustrating a light distribution, schematically showing an illumination range of the headlight produced on a road surface at a time when the lean angle of the motorcycle takes the reference value $K_2$.

[FIG. 14] A diagram illustrating a light distribution, schematically showing an illumination range of the headlight produced on a road surface at a time when the lean angle of the motorcycle takes an upper value $U_2$.

[FIG. 15] A diagram illustrating a light distribution, schematically showing an illumination range of the headlight produced on a road surface at a time when the lean angle of the motorcycle takes a value that is in the range from the lower value $T_3$ to the reference value $K_3$.

[FIG. 16] A diagram illustrating a light distribution, schematically showing an illumination range of the headlight produced on a road surface at a time when the lean angle of the motorcycle takes the reference value $K_3$.

[FIG. 17] A diagram illustrating a light distribution, schematically showing an illumination range of the headlight produced on a road surface at a time when the lean angle of the motorcycle takes the upper value $U_3$.

[FIG. 18] A diagram showing the relationship between the lean angle of the motorcycle and an illumination distance of the headlight illuminating a path of the motorcycle according to the first embodiment of the present invention.

[FIG. 19] A chart showing the relationship between the lean angle of the motorcycle and the brightnesses of the sub headlight light sources according to a second embodiment of the present invention.

[FIG. 20] A diagram showing the relationship between the lean angle of the motorcycle and the illumination distance of the headlight illuminating a path of the motorcycle according to the second embodiment of the present invention.

<First Embodiment>

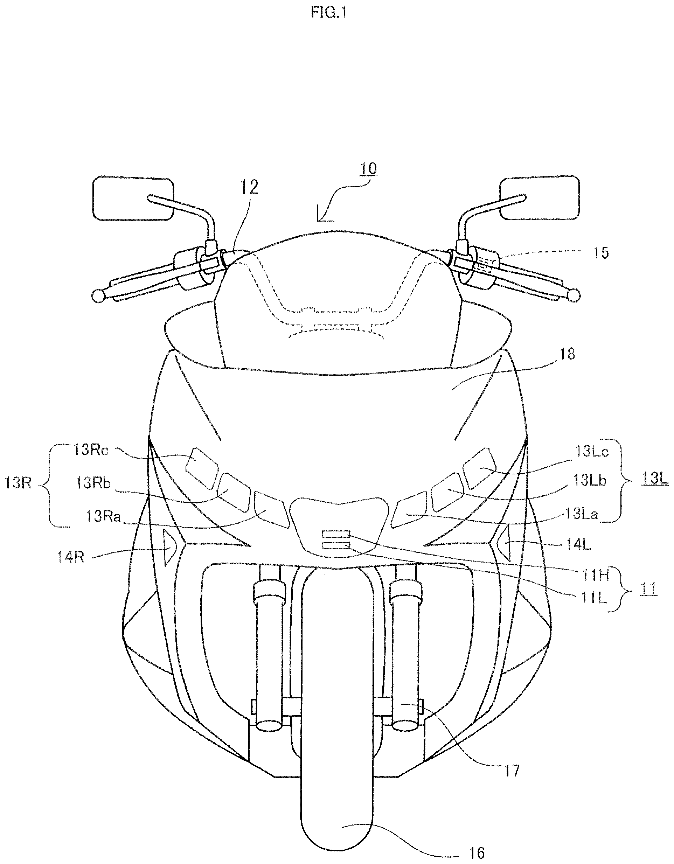

FIG. 1 is a front elevational view schematically showing a motorcycle according to a first embodiment of the present invention.

A motorcycle 10 is an example of a vehicle that leans into turns according to the present invention. In the present invention, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

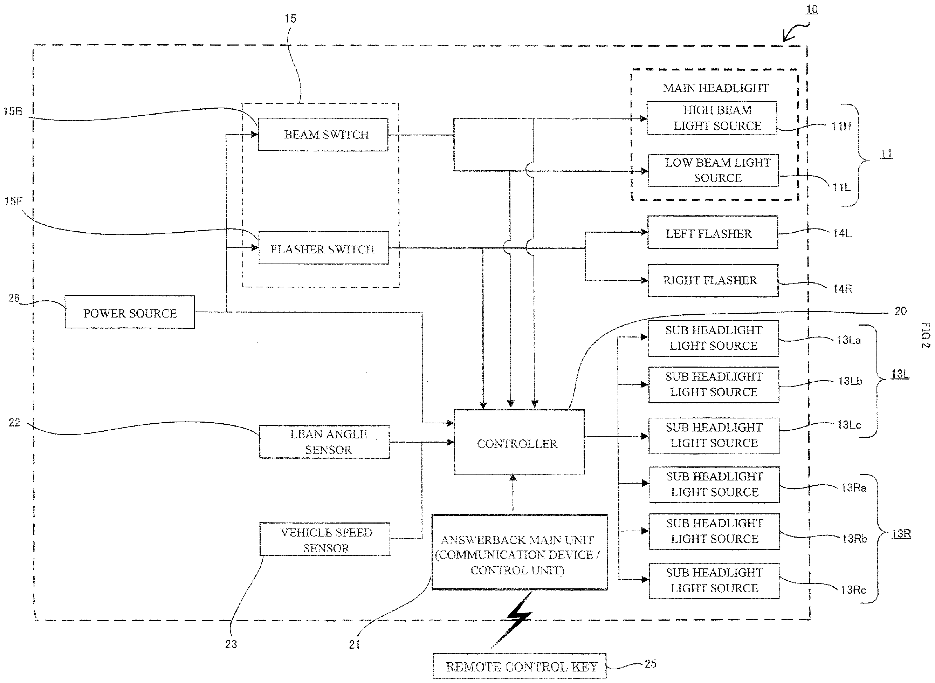

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 2). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel 16 is rotatably supported at the lower end of the frontfork 17. The headpipe is a member constituting a vehicle body frame. In the present invention, no particular limitation is put on the vehicle body frame, and a conventionally known configuration is adoptable.

A front cover 18 covers a front part of the headpipe having the steering shaft passing therethrough. On a front surface of the front cover 18, a main headlight 11 is provided in a center portion with respect to the width direction of the vehicle. The main headlight 11 includes a high beam light source 11H (running headlight) and a low beam light source 11L (passing headlight). The high beam light source 11H illuminates an area ahead of the motorcycle 10 at a height equal to or above a horizontal plane of the main headlight 11. The low beam light source 11L illuminates an area ahead of the motorcycle 10 at a height below the horizontal plane of the main headlight 11.

The high beam light source 11H and the low beam light source 11L are configured such that only one of them is turned on in accordance with an operation performed on the beam switch 15B (see FIG. 2) by the rider.

The motorcycle 10 includes a sub headlight 13. The sub headlight 13 is composed of two sub headlight units 13L and 13R of variable light distribution type. Each of the sub headlight units 13L and 13R is provided at each side with respect to the width direction of the vehicle. The sub headlight unit 13L includes a plurality of sub headlight light sources 13La, 13Lb, and 13Lc. The sub headlight light sources 13La, 13Lb, and 13Lc are arranged in this order from the center toward the upper left with respect to the width direction of the vehicle. The sub headlight light sources 13La, 13Lb, and 13Lc illuminate an area ahead and left-lateral with respect to the width direction of the vehicle. Illumination ranges of the sub headlight light sources 13La, 13Lb, and 13Lc are arranged in this order from the center toward the upper left with respect to the width direction of the vehicle. The illumination ranges of the sub headlight light sources 13La, 13Lb, and 13Lc overlap one another. The sub headlight unit 13R includes a plurality of sub headlight light sources 13Ra, 13Rb, and 13Rc. The sub headlight light sources 13Ra, 13Rb, and 13Rc are arranged in this order from the center toward the upper right with respect to the width direction of the vehicle. The sub headlight light sources 13Ra, 13Rb, and 13Rc illuminate an area ahead and right-lateral with respect to the width direction of the vehicle. Illumination ranges of the sub headlight light sources 13Ra, 13Rb, and 13Rc are arranged in this order from the center toward the upper right with respect to the width direction of the vehicle. The illumination ranges of the sub headlight light sources 13Ra, 13Rb, and 13Rc overlap one another. Optical axes of the sub headlight light sources 13La to 13Lc, 13Ra to 13Rc are fixed, and not moved in accordance with a lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present invention. The present invention is not limited to this example.

Flashers 14L and 14R, serving as direction indicators, are provided at both sides of the motorcycle 10 with respect to the width direction of the vehicle. The flashers 14L and 14R are configured such that only one of them is turned on in accordance with an operation performed on the flasher switch 15F (see FIG. 2) by the rider.

The plurality of sub headlight light sources 13La, 13Lb, and 13Lc, which are positioned at the left side in the motorcycle 10 with respect to the width direction of the vehicle, are arranged between the main headlight 11 and the flasher 14L. The plurality of sub headlight light sources 13Ra, 13Rb, and 13Rc, which are positioned at the right side in the motorcycle 10, are arranged between the main headlight 11 and the flasher 14R. In the present invention, no particular limitation is put on the positional relationship between the sub headlight light source and the flasher with respect to the width direction of the vehicle. For example, it may be acceptable that the sub headlight light source is provided outside the flasher with respect to the width direction of the vehicle.

The plurality of sub headlight light sources 13La, 13Lb, and 13Lc are provided above the main headlight 11 and the flasher 14L. The plurality of sub headlight light sources 13Ra, 13Rb, and 13Rc are provided above the main headlight 11 and the flasher 14R.

The plurality of sub headlight light sources 13La to 13Lc, which are provided to the left with respect to the width direction of the vehicle, illuminate an area ahead of and left-lateral to the motorcycle 10. The plurality of sub headlight light sources 13Ra to 13Rc, which are provided to the right with respect to the width direction of the vehicle, illuminate an area ahead of and right-lateral to the motorcycle 10.

FIG. 2 is a block diagram showing a basic configuration concerning the sub headlight light sources 13La to 13Lc, 13Ra to 13Rc of the motorcycle 10 shown in FIG. 1.

The operation switch 15 includes the beam switch 15B and the flasher switch 15F. The beam switch 15B is connected to the high beam light source 11H and the low beam light source 11 L included in the main headlight 11. When the rider operates the beam switch 15B, turn-on/turn-off of the high beam light source 11H and the low beam light source 11L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about an axis in the front-back direction of the motorcycle 10. The lean angle sensor 22 supplies, to a controller 20, a signal indicating the detected angular velocity (roll rate) about the axis in the front-back direction. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the axis in the front-back direction and the vehicle speed.

In this embodiment, the roll rate is integrated over time, and the vehicle speed is used as correction information, thereby calculating the lean angle. However, in the present invention, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about an axis in the vertical direction) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown).

The memory stores, in the form of data, a plurality of reference values K(°) to be compared with the lean angle. In this embodiment, the memory stores three reference values (a first reference value $K_1$, a second reference value $K_2$, and a third reference value $K_3$). The first reference value $K_1$, the second reference value $K_2$, and the third reference

value $K_3$ satisfy the relationship of "first reference value $K_1$ < second reference value $K_2$ < third reference value $K_3$".

The memory stores, in the form of data, lower values T(°) to be compared with the lean angle. The lower value corresponds to the lean angle obtained when a light source that has been turned off is starting to light up in the course of an increase in the lean angle.

In this embodiment, the memory stores three lower values (a first lower value $T_1$, a second lower value $T_2$, and a third lower value $T_3$). The first lower value $T_1$, the second lower value $T_2$, and the third lower value $T_3$ satisfy the relationship of "first lower value $T_1$ < second lower value $T_2$ < third lower value $T_3$". Each of the lower values T is smaller than each corresponding reference value K. To be specific, the relationship of "first lower value $T_1$ < first reference value $K_1$" is satisfied.

The memory stores, in the form of data, upper values U(°) to be compared with the lean angle. The upper value corresponds to the lean angle obtained when a light source is starting to light up with the highest brightness in the course of an increase in the lean angle.

In this embodiment, the memory stores three upper values (a first upper value $U_1$, a second upper value $U_2$, and a third upper value $U_3$). The first upper value $U_1$, the second upper value $U_2$, and the third upper value $U_3$ satisfy the relationship of "first upper value $U_1$ < second upper value $U_2$ < third upper value $U_3$". Each of the upper values U is greater than each corresponding reference value K. To be specific, the relationship of "first reference value $K_1$ < first upper value $U_1$" is satisfied.

The memory stores, in the form of data, specific values I(°) to be compared with the lean angle. The specific value corresponds to the lean angle obtained when a light source that has lighted up with the highest brightness is starting to dim in the course of an increase in the lean angle.

In this embodiment, the memory stores two specific values (a first specific value $I_1$ and a second specific value $I_2$). The first specific value $I_1$ and the second specific value $I_2$ satisfy the relationship of "first specific value $I_1$ < second specific value $I_2$". Each of the specific values I is greater than each corresponding upper value U. To be specific, the relationship of "first upper value $U_1$ < first specific value $I_1$" is satisfied.

The memory stores, in the form of data, defined values J(°) to be compared with the lean angle. The defined value corresponds to the lean angle obtained when the lowest brightness is achieved in the course of an increase in the lean angle beyond the specific value. While the lean angle is equal to or greater than the defined value, the state (brightness) obtained when the lean angle takes the defined value is maintained.

In this embodiment, the memory stores two defined values (a first defined value $J_1$ and a second defined value $J_2$). The first defined value $J_1$ and the second defined value $J_2$ satisfy the relationship of "first defined value $J_1$ < second defined value $J_2$". Each of the defined values J is greater than each corresponding specific value I. To be specific, the relationship of "first specific value $I_1$ < first defined value $J_1$" is satisfied.

The first reference value $K_1$, the first lower value $T_1$, the first upper value $U_1$, the first specific value $I_1$, and the first defined value $J_1$ are associated with the sub headlight light sources 13La and 13Ra.

The second reference value $K_2$, the second lower value $T_2$, the second upper value $U_2$, the second specific value $I_2$, and the second defined value $J_2$ are associated with the sub headlight light sources 13Lb and 13Rb.

The third reference value $K_3$, the third lower value $T_3$, and the third upper value $U_3$ are associated with the sub headlight light sources 13Lc and 13Rc. The sub headlight light sources 13Lc and 13Rc, with which the greatest reference value is associated, have no specific value and no defined value associated therewith.

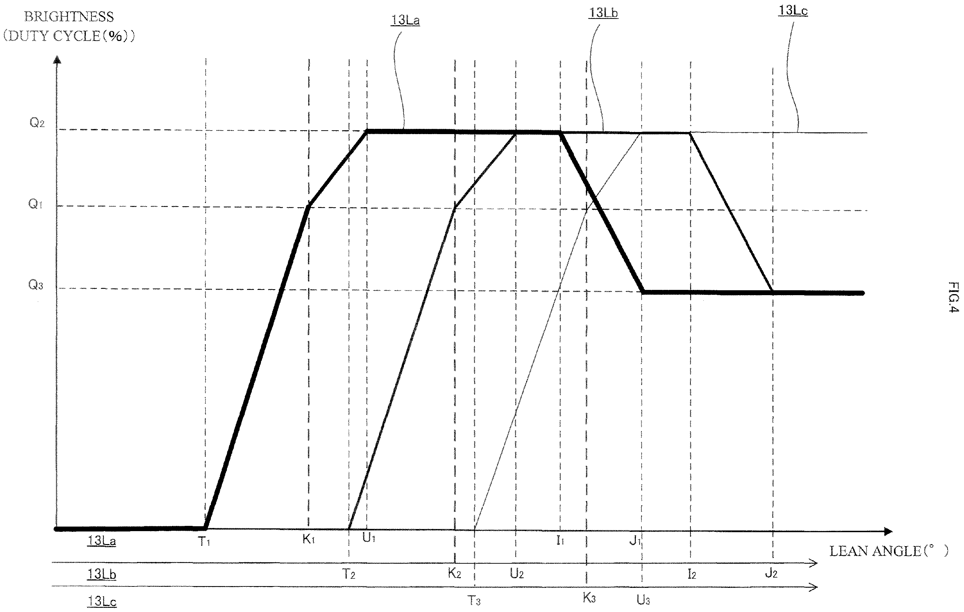

The relationship between each variable and the brightness of the sub headlight light source will be detailed later with reference to FIG. 4.

An answerback main unit 21 is connected to the controller 20. The answerback main unit 21 receives a signal radio wave from a remote control key 25.

The sub headlight light sources 13La to 13Lc, 13Ra to 13Rc are connected to the controller 20. A power source 26 (battery) is connected to the high beam light source 11H and the low beam light source 11L via the beam switch 15B. The power source 26 is connected to the flashers 14L and 14R via the flasher switch 15F. The power source 26 is connected to the controller 20.

The controller 20 controls the brightnesses of the sub headlight light sources 13La to 13Lc, 13Ra to 13Rc. In this embodiment, the sub headlight light sources 13La to 13Lc, 13Ra to 13Rc are configured of LEDs. The controller 20 performs a pulse width modulation control (PWM control) to adjust the duty cycle, and thereby the brightnesses are controlled (dimming control).

A method for performing the dimming control on the sub headlight light source is not particularly limited. For example, it may be conceivable to control a current to be supplied to the sub headlight light source, or to control a voltage to be supplied to the sub headlight light source.

Alternatively, a single sub headlight light source may include a plurality of light sources having different brightnesses. In this case, the dimming control on the sub headlight light source can be implemented by switching which of the light sources is turned on. For example, in a case where a single sub headlight light source includes two light sources having different brightnesses, the brightness of the light source can be controlled by switching the turned-on light source from the light source configured to light up with a first brightness to the light source configured to light up with a second brightness.

Furthermore, a single sub headlight light source may include a plurality of light sources. In this case, the dimming control on the sub headlight light source can be implemented by changing the number or combination of light sources that are turned on. The brightnesses of the plurality of light sources may be either different or the same. For example, in a case where a single sub headlight light source includes a plurality of light sources (for example, four light sources) having the same brightness, turning on part of the plurality of light sources enables the sub headlight light source to light up with the first brightness, while turning on all the plurality of light sources enables the sub headlight light source to light up with the second brightness.

In the motorcycle 10, though not shown in FIG. 2, a voltage detector (not shown) for detecting a supply voltage that is supplied from the power source 26 to each of the sub headlight light sources 13La to 13Lc, 13Ra to 13Rc may be provided in a cable that connects the controller 20 to each of the sub headlight light sources 13La to 13Lc, 13Ra to 13Rc. A supply voltage value detected by the voltage detector is, in the form of data, supplied to the controller 20 at a predetermined timing, for example.

In this case, data indicating a reference voltage value of the power source 26 is stored in the memory of the controller 20. The controller 20 performs an information acquisition process for acquiring data indicating the supply voltage value from the voltage detector, and compares the supply voltage value against the reference voltage value, to calculate a difference between the supply voltage value and the reference voltage value.

The memory of the controller 20 stores a data table indicating a correspondence relationship of the rate of correction of the brightness of the sub headlight light source relative to the difference between the supply voltage value and the reference voltage value. In this data table, as the absolute value of the difference between the supply voltage value and the reference voltage value increases, the absolute value of the rate of correction of the brightness of the sub headlight light source increases. When a difference of the supply voltage value from the reference voltage value is a positive value, the rate of correction is set to be a negative value. Accordingly, after correction, the brightness of the sub headlight light source is reduced as compared with that before the correction. On the other hand, when a difference of the supply voltage value from the reference voltage value is a negative value, the rate of correction is set to be a positive value. Accordingly, after correction, the brightness of the sub headlight light source is increased as compared with that before the correction. A correction object to be corrected is not particularly limited. At least one of a voltage value, a current value, and a duty cycle value may be adopted as the correction object.

It may be also acceptable that the memory stores a table associating the supply voltage value with the rate of correction of the brightness of the sub headlight light source. In this table data, the rate of correction is set based on the reference voltage value. In a case of using such a table data, it is not always necessary that the reference voltage value is stored in the memory, and the controller 20 does not have to calculate the difference of the supply voltage value from the reference voltage value. In this case, an indirect comparison between the supply voltage value and the reference voltage value is performed. Furthermore, although the above-described example describes a case where the memory includes the data table, the rate of correction may be calculated through computing with use of the supply voltage value or with use of the difference of the supply voltage value from the reference voltage value. Then, based on the rate of correction thus obtained, the value of the correction object (such as the voltage, the current, the duty cycle) is corrected. Thereby, a change in the brightness of each of the sub headlight light sources 13La to 13Lc, 13Ra to 13Rc, which is caused by a variation in the supply voltage of the power source 26, can be suppressed. Here, it may be also possible that the controller 20 controls the supply voltage supplied to each of the sub headlight light sources 13La to 13Lc, so that the supply voltage supplied from the controller 20 to each of the sub headlight light sources 13La to 13Lc, 13Ra to 13Rc is made constant. In this case, the brightness of each of the sub headlight light sources 13La to 13Lc, 13Ra to 13Rc can be controlled by adjusting the current value or the duty cycle.

In this embodiment, when the lean angle of the motorcycle 10 is in a range of at least a lower limit value and less than the reference value, the above-described brightness control (adjustment process) is performed on the sub headlight light sources 13La to 13Lc, 13Ra to 13Rc, while when the lean angle is out of this range, the brightness control is not performed. Accordingly, at a time of causing the sub headlight light source to light up with a high brightness, an output of the sub headlight light source can be made without limitation, to make it possible to ensure a wide illumination range. However, the present invention is not limited to this example. The above-described brightness control may be performed irrespective of the lean angle of the motorcycle 10.

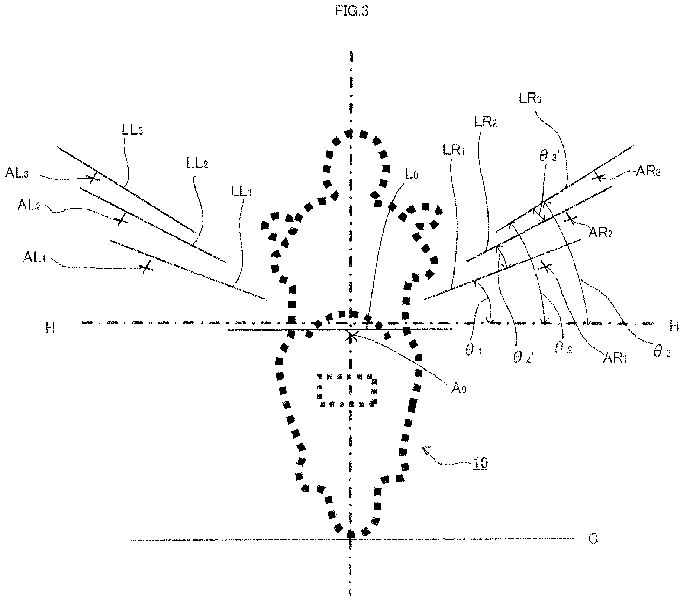

FIG. 3 is a front elevational view schematically showing optical axes and cut-off lines of the sub headlight light sources 13La to 13Lc, 13Ra to 13Rc of the motorcycle 10 in an upright state.

The motorcycle 10 stands upright on a flat ground G. An optical axis $A_0$ of the low beam light source 11L is located below a horizon H of the low beam light source 11L. A cut-off line $L_0$ of the low beam light source 11L is located above the optical axis $A_0$, and located below the horizon H of the low beam light source 11L. The cut-off line $L_0$ extends right and left along the width direction of the vehicle. An illumination range of the low beam light source 11L covers both of the right and left sides with respect to the width direction of the vehicle.

The optical axes $AL_1$ to $AL_3$ of the sub headlight light sources 13La to 13Lc are located outward in the order of the optical axes $AL_1$ to $AL_3$ with respect to the width direction of the vehicle. The optical axes $AL_1$ to $AL_3$ of the sub headlight light sources 13La to 13Lc are located above the optical axis $A_0$ of the low beam light source 11 L.

Inclination angles $\theta_1$ to $\theta_3$ of cut-off lines $LL_1$ to $LL_3$ of the sub headlight light sources 13La to 13Lc increase in the order of the inclination angles $\theta_1$ to $\theta_3$.

The inclination angles $\theta_1$ to $\theta_3$ of the cut-off lines $LL_1$ to $LL_3$ of the sub headlight light sources 13La to 13Lc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy $\theta_1 > \theta_2' > \theta_3'$. In other words, a larger inclination angle ($\theta_1$ to $\theta_3$) has a smaller interval ($\theta_1$, $\theta_2'$, $\theta_3'$). Here, in the present invention, the relationship among the inclination angles ($\theta_1$ to $\theta_3$) is not limited to this example. The intervals ($\theta_1$, $\theta_2'$, $\theta_3'$) may be regular intervals, that is, the relationship of $\theta_1 = \theta_2' = \theta_3'$ may be established.

No particular limitation is put on the relationship between the inclination angle ($\theta_1$ to $\theta_3$) of the cut-offline ($LL_1$ to $LL_3$) of each sub headlight light source (13La to 13Lc) and the reference value ($K_1$ to $K_3$) set for the sub headlight light source (13La to 13Lc). These values (angles) may be either different or the same. A state where these values are the same includes a state where these values are substantially the same.

The cut-off lines $LL_1$ to $LL_3$ of the sub headlight light sources 13La to 13Lc define the upper end edges of the illumination ranges of the sub headlight light sources 13La to 13Lc, respectively, though not shown in FIG. 3. Therefore, the illumination ranges of the sub headlight light sources 13La to 13Lc are located below the cut-off lines $LL_1$ to $LL_3$ of the sub headlight light sources 13La to 13Lc. Accordingly, each of the illumination ranges of the sub headlight light sources 13La to 13Lc includes a space above the horizon H, and their locations are higher in ascending order of the illumination range of the sub headlight light source 13La, the illumination range of the sub headlight light source 13Lb, and the illumination range of the sub headlight light source 13Lc. The illumination ranges of the sub headlight 13La to 13Lc are located at the left side with respect to the width direction of the vehicle.

Except for whether the sub headlight light sources are provided at the right side or the left side of the symmetry, the sub headlight light sources 13Ra to 13Rc are identical to the sub headlight light sources 13La to 13Lc described above. Therefore, a description thereof will be omitted.

Next, a change in the brightness of the sub headlight 13 in accordance with an increase in the lean angle will be described with reference to FIG. 4.

FIG. 4 is a chart showing the relationship between the lean angle of the motorcycle 10 and the brightnesses of the sub headlight light sources 13La to 13Lc according to the first embodiment of the present invention. Among brightnesses $Q_1$ to $Q_3$ of the sub headlight light sources 13La to 13Lc, $Q_1$ represents a first brightness, $Q_2$ represents a second brightness, and $Q_3$ represents a third brightness. The brightnesses $Q_1$ to $Q_3$ of the sub headlight light sources 13La to 13Lc satisfy the relationship of $Q_3 < Q_1 < Q_2$.

$$[\text{Lean Angle} = 0°]$$

When the lean angle is 0°, each of the light sources of the sub headlight 13 is in the following state.

The sub headlight light source 13La is not turned on.

The sub headlight light source 13Lb is not turned on.

The sub headlight light source 13Lc is not turned on.

$$[0° < \text{Lean Angle}(°) < \text{First Reference Value } K_1]$$

In the course of an increase in the lean angle from 0°, each of the light sources of the sub headlight 13 is as follows.

The sub headlight light source 13La starts to light up when the lean angle reaches the first lower value $T_1$ that is set for the sub headlight light source 13La. When the lean angle is in the range from the first lower value $T_1$ to the first reference value $K_1$, the brightness of the sub headlight light source 13La continuously increases along with the increase in the lean angle. That is, when the lean angle is in the range from the first lower value $T_1$ to the first reference value $K_1$, the sub headlight light source 13La lights up with a brightness lower than the first brightness $Q_1$.

The sub headlight light source 13Lb is not turned on.

The sub headlight light source 13Lc is not turned on.

$$[\text{Lean Angle}(°) = \text{First Reference Value } K_1]$$

When the lean angle reaches the reference value $K_1$ that is set for the sub headlight light source 13La, each of the light sources of the sub headlight 13 is in the following state.

The sub headlight light source 13La lights up with the first brightness $Q_1$.

The sub headlight light source 13Lb is not turned on.

The sub headlight light source 13Lc is not turned on.

## [First Reference Value $K_1$ < Lean Angle(°) < Second Reference Value $K_2$]

In the course of an increase in the lean angle from the first reference value $K_1$, each of the light sources of the sub headlight 13 is as follows.

The brightness of the sub headlight light source 13La continuously increases along with the increase in the lean angle until the lean angle reaches the first upper value $U_1$. When the lean angle reaches the first upper value $U_1$, the sub headlight light source 13La lights up with the second brightness $Q_2$. When the lean angle is in the range from the first upper value $U_1$ to the first specific value $I_1$, the sub headlight light source 13La lights up with the second brightness $Q_2$.

The sub headlight light source 13Lb starts to light up when the lean angle reaches the second lower value $T_2$ that is set for the sub headlight light source 13Lb. When the lean angle is in the range from the second lower value $T_2$ to the second reference value $K_2$, the brightness of the sub headlight light source 13Lb continuously increases along with the increase in the lean angle.

The sub headlight light source 13Lc is not turned on.

## [Lean Angle(°) = Second Reference Value $K_2$]

When the lean angle reaches the reference value $K_2$ that is set for the sub headlight light source 13Lb, each of the light sources of the sub headlight 13 is in the following state.

The sub headlight light source 13La lights up with the brightness $Q_2$.

The sub headlight light source 13Lb lights up with the brightness $Q_1$.

The sub headlight light source 13Lc is not turned on.

## [Second Reference Value $K_2$ < Lean Angle(°) < Third Reference Value $K_3$]

In the course of an increase in the lean angle from the second reference value $K_2$, each of the light sources of the sub headlight 13 is as follows.

The sub headlight light source 13La lights up with the second brightness $Q_2$ until the lean angle reaches the first specific value $I_1$. After the lean angle reaches the first specific value $I_1$, the brightness of the sub headlight light source 13La continuously decreases along with the increase in the lean angle.

The brightness of the sub headlight light source 13Lb continuously increases along with the increase in the lean angle when the lean angle is in the range from the second reference value $K_2$ to the second upper value $U_2$. When the lean angle reaches the second upper value $U_2$, the sub headlight light source 13Lb lights up with the second brightness $Q_2$.

The sub headlight light source 13Lc starts to light up when the lean angle reaches the third lower value $T_3$ that is set for the sub headlight light source 13Lc. When the lean angle is in the range from the third lower value $T_3$ to the third reference value $K_3$, the brightness of the sub headlight light source 13Lc continuously increases along with the increase in the lean angle.

## [Lean Angle(°) = Third Reference Value $K_3$]

When the lean angle reaches the reference value $K_3$ that is set for the sub headlight light source 13Lc, each of the light sources of the sub headlight 13 is in the following state.

The sub headlight light source 13La lights up with a brightness lower than the second brightness $Q_2$ and higher than the third brightness $Q_3$.

The sub headlight light source 13Lb lights up with the second brightness $Q_2$.

The sub headlight light source 13Lc lights up with the first brightness $Q_1$.

[Third Reference Value $K_3$ < Lean Angle(°)]

In the course of an increase in the lean angle from the reference value $K_3$, each of the light sources of the sub headlight 13 is as follows.

The brightness of the sub headlight light source 13La continuously decreases along with the increase in the lean angle until the lean angle reaches the first defined value $J_1$. When the lean angle is equal to or greater than the first defined value $J_1$, the sub headlight light source 13La lights up with the brightness $Q_3$.

The sub headlight light source 13Lb lights up with the second brightness $Q_2$ until the lean angle reaches the second specific value $I_2$. After the lean angle reaches the second specific value $I_2$, the brightness of the sub headlight light source 13Lb continuously decreases along with the increase in the lean angle. When the lean angle is equal to or greater than the second defined value $J_2$, the sub headlight light source 13Lb lights up with the brightness $Q_3$.

The sub headlight light source 13Lc lights up with the brightness $Q_2$ when the lean angle is equal to or greater than the upper value $U_3$.

The brightnesses of the sub headlight light sources 13La to 13Lc are changed in accordance with the lean angle, as follows.

When the lean angle is equal to or greater than 0° and less than the lower value $T_1$ to $T_3$ that is set for the sub headlight light source 13La to 13Lc, the corresponding sub headlight light source 13La to 13Lc is turned off.

When the lean angle is equal to or greater than the lower value $T_1$ to $T_3$ that is set for the sub headlight light source 13La to 13Lc and less than the reference value $K_1$ to $K_3$ that is set for the sub headlight light source 13La to 13Lc, the corresponding sub headlight light source 13La to 13Lc lights up with a brightness lower than the first brightness $Q_1$. When the lean angle is equal to or greater than the lower value $T_1$ to $T_3$ and less than the reference value $K_1$ to $K_3$, the brightness of the corresponding sub headlight light source 13La to 13Lc continuously increases along with an increase in the lean angle, and the brightness of the corresponding sub headlight light source 13La to 13Lc continuously decreases along with a decrease in the lean angle.

When the lean angle takes the reference value $K_1$ to $K_3$, the corresponding sub headlight light source 13La to 13Lc lights up with the first brightness $Q_1$.

When the lean angle is greater than the reference value $K_1$ to $K_3$ and less than the upper value $U_1$ to $U_3$, the corresponding sub headlight light source 13La to 13Lc lights up with a brightness higher than the first brightness $Q_1$ and lower than the second brightness $Q_2$. When the lean angle is greater than the reference value $K_1$ to $K_3$ and less than the upper value $U_1$ to $U_3$, the brightness of the corresponding sub headlight light source 13La to 13Lc continuously increases along with an increase in the lean angle, and the brightness of the corresponding sub headlight light source 13La to 13Lc continuously decreases along with a decrease in the lean angle.

When the lean angle takes the upper value $U_1$ to $U_3$, the corresponding sub headlight light source 13La to 13Lc lights up with the second brightness $Q_2$.

In this embodiment, when the lean angle is equal to or greater than the lower value $T_1$ to $T_3$ that is set for the sub headlight light source 13La to 13Lc and less than the reference value $K_1$ to $K_3$ that is set for the sub headlight light source 13La to 13Lc, the brightness of the corresponding sub headlight light sources 13La to 13Lc continuously increases along with an increase in the lean angle. However, the present invention is not limited to this example. In the present invention, it suffices that, when the lean angle takes the lower value $T_1$ to $T_3$, the corresponding sub headlight light source 13La to 13Lc lights up with a brightness lower than the first brightness $Q_1$. Therefore, the corresponding sub headlight light source 13La to 13Lc may light up with a predetermined brightness lower than the first brightness $Q_1$. However, when the lean angle is equal to or greater than the lower value T1 to T3 that is set for the sub headlight light source 13La to 13Lc and less than the reference value K1 to K3 that is set for the sub headlight light source 13La to 13Lc, continuously increasing the brightness of the sub headlight light source 13La to 13Lc in accordance with an increase in the lean angle causes the brightness of the sub headlight light source 13La to 13Lc to gradually increase. This can suppress occurrence of a situation where the corresponding headlight light source 13La to 13Lc suddenly lights up with a high brightness to make the rider feel uncomfortable.

In this embodiment, the specific value and the defined value are not set for the sub headlight light source 13Lc having the greatest reference value set therefor among the plurality of sub headlight light sources 13La to 13Lc. Thus, even when the lean angle increases beyond the upper value $U_3$, the sub headlight light source 13Lc having the greatest reference value set therefor keeps lighting up with the second brightness $Q_2$.

On the other hand, for the sub headlight light sources 13La and 13Lb having the reference values smaller than the greatest reference value set therefor, the specific values $I_1$ and $I_2$ and the defined values $J_1$ and $J_2$ are set, respectively.

When the lean angle is greater than the upper value $U_1$, $U_2$ and equal to or less than the specific value $I_1$, $I_2$, the corresponding sub headlight light source 13La, 13Lb having the reference value smaller than the greatest reference value set therefor lights up with the second brightness $Q_2$. When the lean angle is greater than the specific value $I_1$, $I_2$

and less than the defined value $J_1$, $J_2$, the corresponding sub headlight light source 13La, 13Lb having the reference value smaller than the greatest reference value set therefor lights up with a brightness lower than the second brightness $Q_2$ and higher than the third brightness $Q_3$. When the lean angle is greater than the specific value $I_1$, $I_2$ and less than the defined value $J_1$, $J_2$, the brightness of the corresponding sub headlight light source 13La, 13Lb having the reference value smaller than the greatest reference value set therefor continuously decreases along with an increase in the lean angle, and the brightness of the corresponding sub headlight light source 13La, 13Lb having the reference value smaller than the greatest reference value set therefor continuously increases along with a decrease in the lean angle. When the lean angle is equal to or greater than the defined value $J_1$, $J_2$, the corresponding sub headlight light source 13La, 13Lb lights up with the third brightness $Q_3$.

This embodiment describes a case where the specific value and the defined value are not set for one sub headlight light source 13Lc having the greatest reference value set therefor. However, the present invention is not limited to this example. It may be acceptable that the specific values and the defined values are set for all the sub headlight light sources 13La to 13Lc.

In FIG. 4, the duty cycle of a voltage supplied to the sub headlight light source is adopted as an index of the brightness of the sub headlight light source. However, in the present invention, the index of the brightness of the sub headlight light source is not limited to this example. Examples of the index include a supply voltage, a supplied current, an illuminance obtained at a position at a predetermined distance from the light source, and a luminance of the light source. When any index is adopted, the above-described magnitude relationship ($Q_3<Q_1<Q_2$) among the brightnesses of the sub headlight light source is established. The brightnesses $Q_1$, $Q_2$, and $Q_3$ are not particularly limited, and appropriately set as needed. In this embodiment, the sub headlight light sources 13La to 13Lc and the sub headlight light source 13Ra to 13Rc adopt the same brightnesses $Q_1$, $Q_2$, and $Q_3$. However, the present invention is not limited to this example, and appropriate setting is made as needed.

Next, a change in a screen light distribution of the headlight in accordance with the lean angle of the motorcycle 10 will be described with reference to FIGS. 5 to 7.

FIG. 5(a) is a diagram schematically showing a screen light distribution obtained when the lean angle of the motorcycle 10 takes a value that is in the range from the lower value $T_1$ to the reference value $K_1$ and is relatively close to the lower value $T_1$.

An illumination range LB of the low beam light source 11L is located ahead in front of the motorcycle 10. An illumination range $SH_1$ of the sub headlight light source 13La is located above a left portion of the illumination range LB. The cut-off line $LL_1$ of the sub headlight light source 13La is located above the horizon H. Here, the sub headlight light source 13La lights up with a brightness lower than the brightness $Q_1$ (FIG. 4).

FIG. 5(b) is a diagram schematically showing a screen light distribution obtained when the lean angle of the motorcycle 10 takes a value that is in the range from the lower value $T_1$ to the reference value $K_1$ and is greater than the lean angle shown in FIG. 5(a).

In FIG. 5(b), the illumination ranges LB and $SH_1$ tilt toward the lower left as compared with FIG. 5(a). The cut-off line $LL_1$ of the sub headlight light source 13La is adjacent to the horizon H at a location above the horizon H. Here, the sub headlight light source 13La lights up with a brightness lower than the brightness $Q_1$ and higher than the brightness in the state shown in FIG. 5(a) (FIG. 4).

FIG. 5(c) is a diagram schematically showing a screen light distribution obtained when the lean angle of the motorcycle 10 takes the reference value $K_1$.

In FIG. 5(c), the illumination ranges LB and $SH_1$ tilt toward the lower left as compared with FIG. 5(b). The cut-offline $LL_1$ of the sub headlight light source 13La is located below the horizon H. The illumination range $SH_1$ of the sub headlight light source 13La is located in a space below the horizon H. Here, the sub headlight light source 13La lights up with the brightness $Q_1$ (FIG. 4).

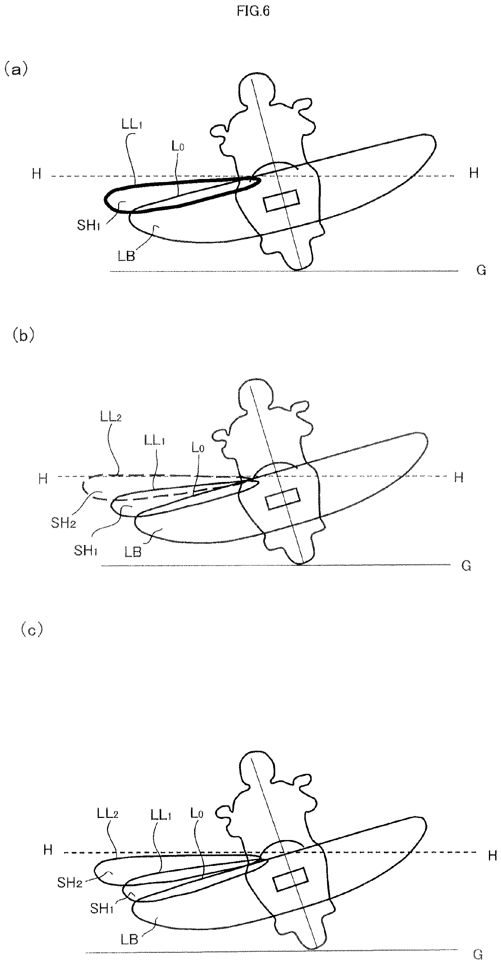

FIG. 6(a) is a diagram schematically showing a screen light distribution obtained when the lean angle of the motorcycle 10 takes the upper value $U_1$.

In FIG. 6(a), the illumination ranges LB and $SH_1$ tilt toward the lower left as compared with FIG. 5(c). The cut-offline $LL_1$ of the sub headlight light source 13La is located below the horizon H while tilting toward the lower left. Here, the sub headlight light source 13La lights up with the brightness $Q_2$ (FIG. 4).

The cut-off line $LL_1$ obtained when the lean angle takes the reference value $K_1$ (FIG. 5(c)) is closer to horizontal than the cut-off line $LL_1$ obtained when the lean angle takes the upper value $U_1$ (FIG. 6(a)) and the cut-off line $LL_1$ obtained when the motorcycle 10 is in the upright state (FIG. 3). The same applies to the cut-off lines $LL_2$ and $LL_3$, too, though not shown.

FIG. 6(b) is a diagram schematically showing a screen light distribution obtained when the lean angle of the motorcycle 10 takes a value that is in the range from the lower value $T_2$ to the reference value $K_2$.

In FIG. 6(b), the illumination ranges LB and $SH_1$ tilt toward the lower left as compared with FIG. 6(a). An illumination range $SH_2$ of the sub headlight light source 13Lb is located above the illumination range $SH_1$. The cut-off line $LL_2$ of the sub headlight light source 13Lb is adjacent to the horizon H at a location above the horizon H. Here, the sub headlight light source 13Lb lights up with a brightness lower than the brightness $Q_1$ (FIG. 4).

FIG. 6(c) is a diagram schematically showing a screen light distribution obtained when the lean angle of the motorcycle 10 takes the reference value $K_2$.

In FIG. 6(c), the illumination ranges LB, $SH_1$, and $SH_2$ tilt toward the lower left as compared with FIG. 6(b). The cut-off line $LL_2$ of the sub headlight light source 13Lb is located below the horizon H. The illumination range $SH_2$ of the sub headlight light source 13Lb is located in a space below the horizon H. Here, the sub headlight light source 13Lb lights up with the brightness $Q_1$ (FIG. 4).

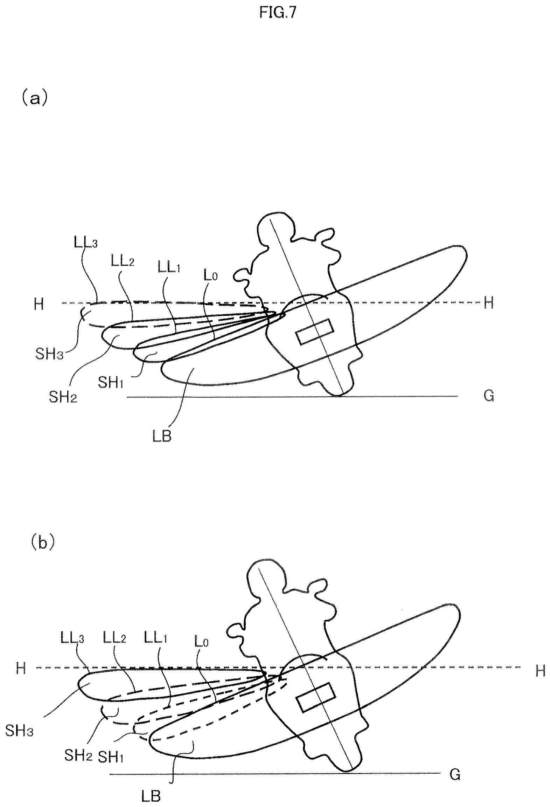

FIG. 7(a) is a diagram schematically showing a screen light distribution obtained when the lean angle of the motorcycle 10 takes a value that is in the range from the lower value $T_3$ to the reference value $K_3$.

In FIG. 7(a), the illumination ranges LB, $SH_1$, and $SH_2$ tilt toward the lower left as compared with FIG. 6(c). An illumination range $SH_3$ of the sub headlight light source 13Lc is located above the illumination range $SH_2$. The cut-off line $LL_3$ of the sub headlight light source 13Lc is adjacent to the horizon H at a location above the horizon H. Here, the sub headlight light source 13Lc lights up with a brightness lower than the brightness $Q_1$ (FIG. 4).

FIG. 7(b) is a diagram schematically showing a screen light distribution obtained when the lean angle of the motorcycle 10 takes the reference value $K_3$.

In FIG. 7(b), the illumination ranges LB, $SH_1$ to $SH_3$ tilt toward the lower left as compared with FIG. 7(a). The cut-off line $LL_3$ of the sub headlight light source 13Lc is located below the horizon H. The illumination range $SH_3$ of the sub headlight light source 13Lc is located in a space below the horizon H. Here, the sub headlight light source 13Lc lights up with the brightness $Q_2$ (FIG. 4).

In the course of an increase in the lean angle of the motorcycle 10 (FIGS. 5(a) to 7(b)), it is preferable that the illumination range $SH_1$, $SH_2$, or $SH_3$ of the sub headlight light source 13La, 13Lb, or 13Lc produced when the lean angle of the motorcycle 10 reaches the lower value $T_1$ $T_2$, or $T_3$ set for this sub headlight light source 13La, 13Lb, or 13Lc partially overlaps the illumination range LB or the illumination range $SH_1$ or $SH_2$ of the low beam light source 11L or the sub headlight light source 13La or 13Lb, that has been turned on immediately before this sub headlight light source 13La, 13Lb, or 13Lc.

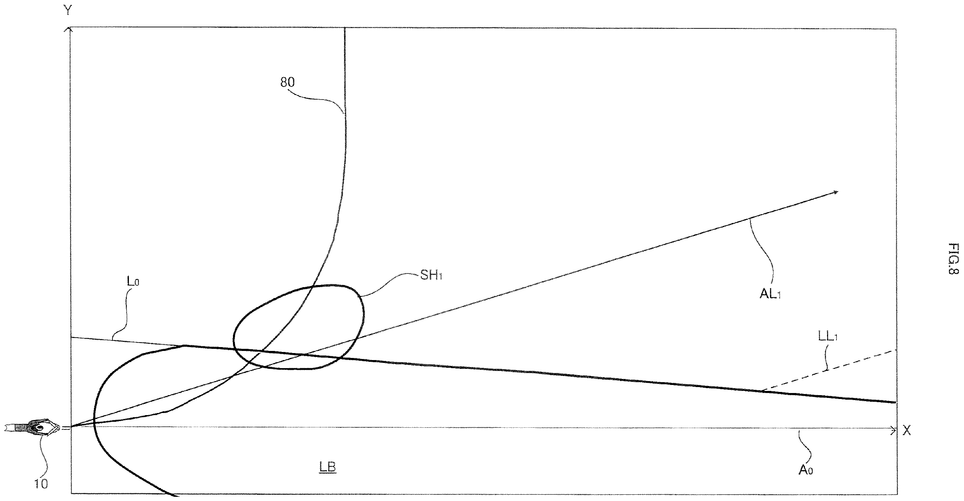

Next, a change in an illumination range of the headlight in accordance with the lean angle of the motorcycle 10 will be described with reference to FIGS. 8 to 17. In FIGS. 8 to 17, X represents a straight ahead direction of the motorcycle 10 that leans into turns, and Y represents the left side with respect to the width direction of the motorcycle 10. The reference numeral 80 denotes a path of the motorcycle 10. The path 80 curves to the left, with a predetermined radius.

FIG. 8 illustrates a light distribution, schematically showing an illumination range of the headlight produced on a road surface at a time when the lean angle of the motorcycle 10 takes a value that is in the range from the lower value $T_1$ to the reference value $K_1$ and is relatively close to the lower value $T_1$.

The illumination range LB of the low beam light source 11 L having an illuminance $L_1$ spreads ahead of the motorcycle 10 along the advancing direction X. Since the motorcycle 10 is inclined to the left, the cut-off line $L_0$ of the low beam light source 11L approaches to the motorcycle 10 from the left side of the motorcycle 10. Accordingly, on the path 80, only a region relatively close to the motorcycle 10 is covered by the illumination range having the illuminance $L_1$.

In running, the rider normally looks at a position on the path 80 ahead of the motorcycle 10. Therefore, the cut-off line $L_0$ approaching to the motorcycle 10 enters the rider's field of view.

On the other hand, the sub headlight light source 13La produces illumination along the optical axis $AL_1$. Therefore, on the path 80, the illumination range $SH_1$ of the sub headlight light source 13La covers the cut-off line $L_0$ of the low beam light source 11 L. Accordingly, the movement of the cut-off line $L_0$ of the low beam light source 11L within the rider's field of view is less likely to be conspicuous. Moreover, the cut-off line $LL_1$ of the sub headlight light source 13La is located at a relatively farther position ahead of the motorcycle 10. In a state shown in FIG. 8, the cut-off line $LL_1$ is less clear than the cut-off line $L_0$.

Moreover, a region on the path 80 covered by the illumination range having the illuminance $L_1$ is elongated. The illumination range $SH_1$ of the sub headlight light source 13La spreads over a position the rider desires to see.

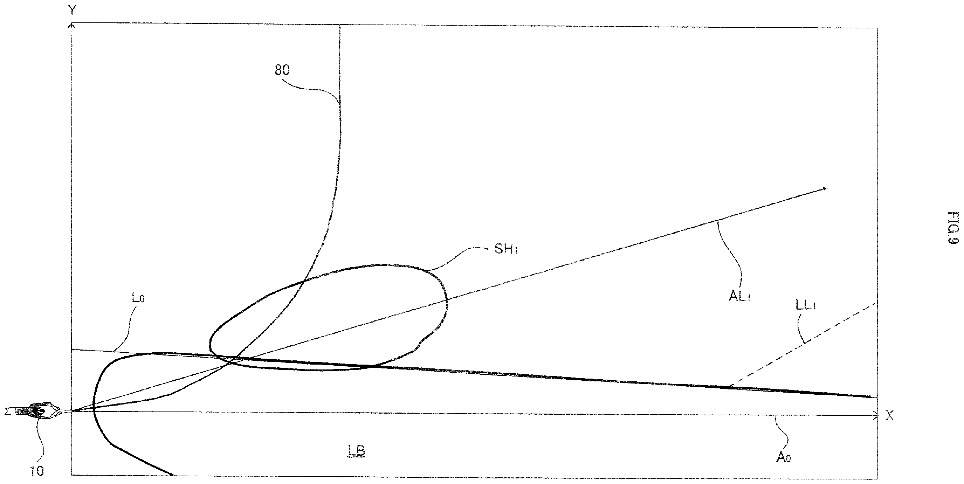

FIG. 9 illustrates a light distribution, schematically showing an illumination range of the headlight produced on a road surface at a time when the lean angle of the motorcycle 10 takes a value that is in the range from the lower value $T_1$ to the reference value $K_1$ and is greater than the lean angle shown in FIG. 8.

In a state shown in FIG. 9, the lean angle of the motorcycle 10 increases as compared with the state shown in FIG. 8. Therefore, the cut-off line $L_0$ of the low beam light source 11L further approaches to the motorcycle 10 as compared with the state shown in FIG. 8. Accordingly, the region on the path 80 covered by the illumination range LB of the low beam light source 11L having the illuminance $L_1$ is shortened.

On the other hand, the brightness of the sub headlight light source 13La increases in accordance with the increase in the lean angle, and therefore the illumination range $SH_1$ is enlarged. As a result, the illumination range $SH_1$ of the sub headlight light source 13La still covers the cut-off line $L_0$ of the low beam light source 11 L on the path 80. Accordingly, the movement of the cut-off line $L_0$ of the low beam light source 11L within the rider's field of view is less likely to be conspicuous. Moreover, the cut-off line $LL_1$ of the sub headlight light source 13La is located at a relatively farther position ahead of the motorcycle 10. In the state shown in FIG. 9, the cut-off line $LL_1$ is less clear than the cut-off line $L_0$.

In the state shown in FIG. 9, the lean angle increases as compared with the state shown in FIG. 8, but the brightness of the sub headlight light source 13La increases so that a region on the path 80 covered by the illumination range having the illuminance $L_1$ is ensured to the same extent as in the state shown in FIG. 8. As a result, the illumination range $SH_1$ of the sub headlight light source 13La spreads over the position the rider desires to see (on the path 80).

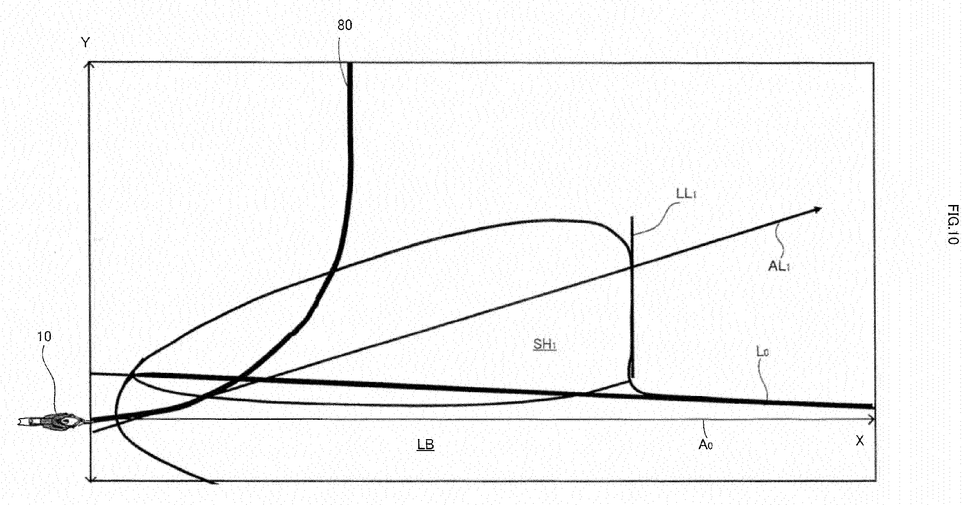

FIG. 10 illustrates a light distribution, schematically showing an illumination range of the headlight produced on a road surface at a time when the lean angle of the motorcycle 10 takes the reference value $K_1$.

In a state shown in FIG. 10, the lean angle of the motorcycle 10 increases as compared with the state shown in FIG. 9. Therefore, the cut-off line $L_0$ of the low beam light source 11 L further approaches to the motorcycle 10 as compared with the state shown in FIG. 9. Accordingly, the region on the path 80 covered by the illumination range LB of the low beam light source 11L having the illuminance $L_1$ is further shortened.

On the other hand, the sub headlight light source 13La is lighting up with the first brightness $Q_1$, and the brightness of the sub headlight light source 13La increases in accordance with the increase in the lean angle. Therefore, the illumination range $SH_1$ is enlarged. As a result, the illumination range $SH_1$ of the sub headlight light source 13 La still covers the cut-off line $L_0$ of the low beam light source 11L on the path 80. Accordingly, the movement of the cut-off line $L_0$ of the low beam light source 11L within the rider's field of view is less likely to be conspicuous.

In the state shown in FIG. 10, the lean angle increases as compared with the state shown in FIG. 9, but the brightness of the sub headlight light source 13La increases so that a region on the path 80 covered by the illumination range having the illuminance $L_1$ is ensured to the same extent as in the state shown in FIG. 9. As a result, the illumination range $SH_1$ of the sub headlight light source 13La spreads over the position the rider desires to see (on the path 80). The cut-off line $LL_1$ of the sub headlight light source 13La is located at the side (X side) of the illumination range $SH_1$ to which the motorcycle 10 is advancing. The cut-off line $LL_1$ extends right and left along the width direction of the vehicle (Y direction).

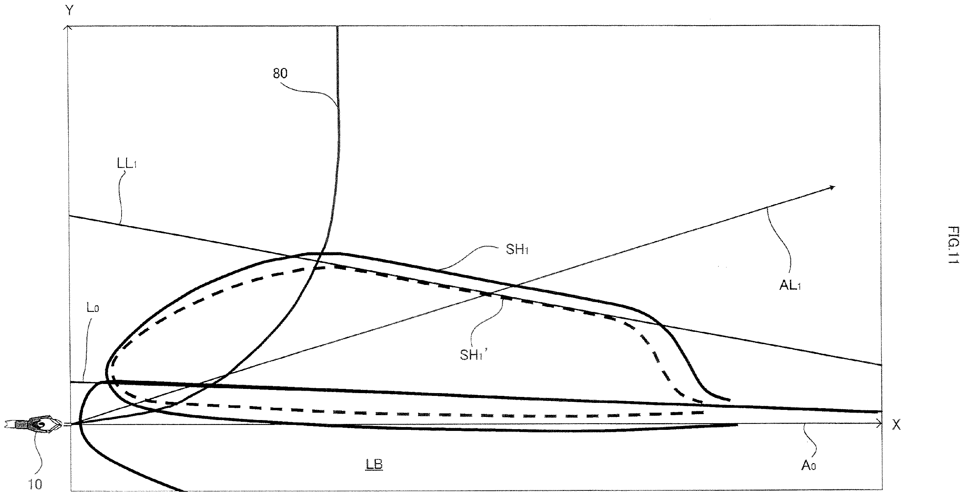

FIG. 11 illustrates a light distribution, schematically showing an illumination range of the headlight produced on a road surface at a time when the lean angle of the motorcycle 10 takes the upper value $U_1$. In this embodiment, the lower value $T_2$ is less than the upper value $U_1$. Therefore, when the lean angle of the motorcycle 10 takes the upper value $U_1$, the sub headlight light source 13Lb has already started to light up. However, the illumination range $SH_2$ of the sub headlight light source 13Lb is not shown in FIG. 11.

In a state shown in FIG. 11, the lean angle of the motorcycle 10 increases as compared with the state shown in FIG. 10. Therefore, the cut-off line $L_0$ of the low beam light source 11 L further approaches to the motorcycle 10 as compared with the state shown in FIG. 10. In addition, the cut-off line $LL_1$ of the sub headlight light source 13La also approaches to the motorcycle 10 from the left side of the motorcycle 10.

On the other hand, while the lean angle is increasing from the reference value $K_1$ to the upper value $U_1$, the brightness of the sub headlight light source 13La is increasing from the first brightness $Q_1$ to the second brightness $Q_2$. Therefore, the illumination range $SH_1$ of the sub headlight light source 13La is enlarged. In FIG. 11, a region $SH_1'$ enclosed by the broken line indicates an illumination range of the sub headlight light source 13La obtained when the sub headlight light source 13La lights up with the first brightness $Q_1$. The illumination range $SH_1$ of the sub headlight light source 13La is larger than the region $SH_1'$ enclosed by the broken line.

Thus, in the motorcycle 10, when the lean angle increases from the reference value $K_1$ to the upper value $U_1$, the cut-off line $LL_1$ of the sub headlight light source 13La approaches to the motorcycle 10 along with the increase in the lean angle, but the illumination range $SH_1$ is enlarged in accordance with the increase in the brightness of the sub headlight light source 13La from the first brightness $Q_1$ to the second brightness $Q_2$. Thereby, the speed of approach of the cut-off line $LL_1$ to the motorcycle 10 can be reduced.

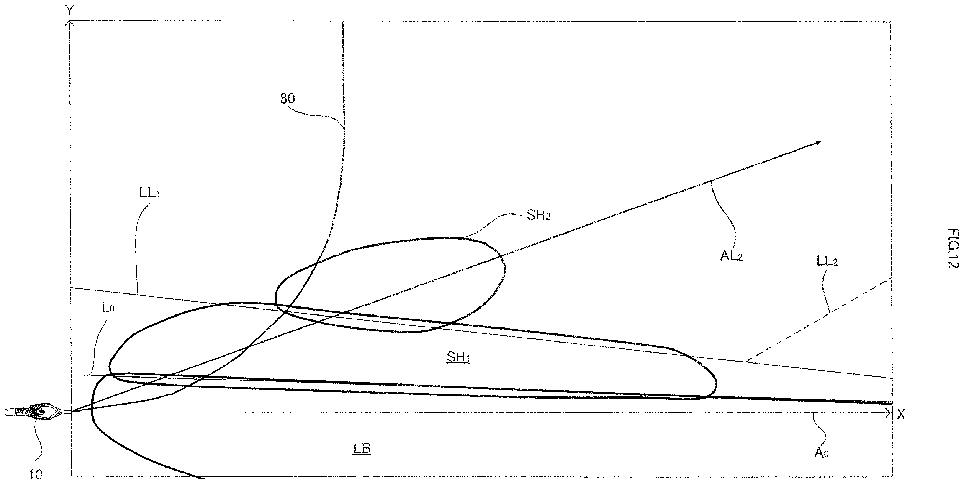

FIG. 12 illustrates a light distribution, schematically showing an illumination range of the headlight produced on a road surface at a time when the lean angle of the motorcycle 10 takes a value that is in the range from the lower value $T_2$ to the reference value $K_2$.

In a state shown in FIG. 12, the lean angle of the motorcycle 10 increases as compared with the state shown in FIG. 11. Therefore, the cut-off line $LL_1$ of the sub headlight light source 13La further approaches to the motorcycle 10 as compared with the state shown in FIG. 11. Accordingly, a region on the path 80 covered by the illumination ranges LB and $SH_1$ is shortened.

On the other hand, the sub headlight light source 13Lb produces illumination along the optical axis $AL_2$. Therefore, on the path 80, the illumination range $SH_2$ of the sub headlight light source 13Lb covers the cut-off line $LL_1$ of the sub headlight light source 13La. Accordingly, the movement of the cut-off line $LL_1$ of the sub headlight light source 13La within the rider's field of view is less likely to be conspicuous. Moreover, the cut-offline $LL_2$ of the sub headlight light source 13Lb is located at a relatively farther position ahead of the motorcycle 10. In the state shown in FIG. 12, the cut-off line $LL_2$ is less clear than the cut-off line $LL_1$.

Moreover, a region on the path 80 covered by the illumination range having the illuminance $L_1$ is elongated. The illumination range $SH_2$ of the sub headlight light source 13Lb spreads over the position the rider desires to see.

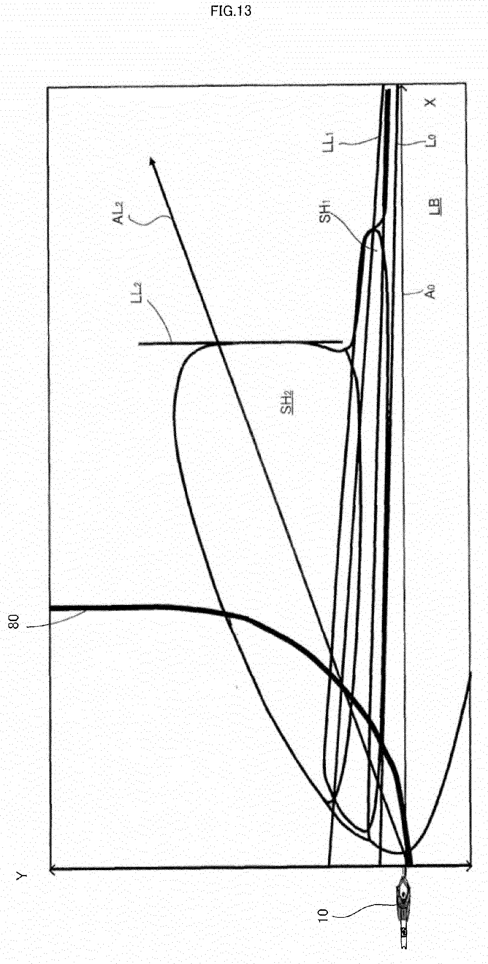

FIG. 13 illustrates a light distribution, schematically showing an illumination range of the headlight produced on a road surface at a time when the lean angle of the motorcycle 10 takes the reference value $K_2$.

In a state shown in FIG. 13, the lean angle of the motorcycle 10 increases as compared with the state shown in FIG. 12. Therefore, the cut-off line $LL_1$ of the sub headlight light source 13La further approaches to the motorcycle 10 as compared with the state shown in FIG. 12. Accordingly, the region covered by the illumination range $SH_1$ of the sub headlight light source 13La having the illuminance $L_1$ is further shortened.

On the other hand, the sub headlight light source 13Lb is lighting up with the first brightness $Q_1$, and the brightness of the sub headlight light source 13Lb increases along with the increase in the lean angle. Therefore, the illumination range $SH_2$ is enlarged. As a result, the illumination range $SH_2$ of the sub headlight light source 13Lb still covers the cut-offline $LL_1$ of the sub headlight light source 13La on the path 80. Accordingly, the movement of the cut-off line $LL_1$ of the sub headlight light source 13La within the rider's field of view is less likely to be conspicuous.

In the state shown in FIG. 13, the lean angle increases as compared with the state shown in FIG. 12, but the brightness of the sub headlight light source 13Lb increases so that a region on the path 80 covered by the illumination range having the illuminance $L_1$ is ensured to the same extent as in the state shown in FIG. 12. As a result, the illumination range $SH_2$ of the sub headlight light source 13Lb spreads over the position the rider desires to see (on the path 80). The cut-off line $LL_2$ of the sub headlight light source 13Lb is located at the side (X side) of the illumination range $SH_2$ to which the motorcycle 10 is advancing. The cut-off line $LL_2$ extends right and left along the width direction of the vehicle (Y direction).

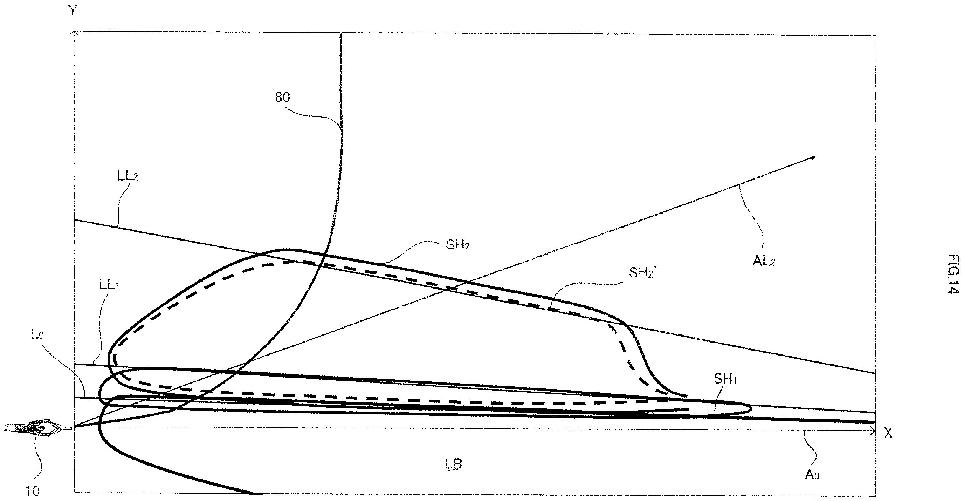

FIG. 14 illustrates a light distribution, schematically showing an illumination range of the headlight produced on a road surface at a time when the lean angle of the motorcycle 10 takes the upper value $U_2$. In this embodiment, the lower value $T_3$ is less than the upper value $U_2$. Therefore, when the lean angle of the motorcycle 10 takes the upper value $U_2$, the sub headlight light source 13Lc has already started to light up. However, the illumination range $SH_3$ of the sub headlight light source 13Lc is not shown in FIG. 14.

In a state shown in FIG. 14, the lean angle of the motorcycle 10 increases as compared with the state shown in FIG. 13. Therefore, the cut-off line $LL_1$ of the sub headlight light source 13La further approaches to the motorcycle 10 as compared with the state shown in FIG. 13. The cut-off line $LL_2$ of the sub headlight light source 13Lb also approaches to the motorcycle 10 from the left side of the motorcycle 10.

On the other hand, while the lean angle is increasing from the reference value $K_2$ to the upper value $U_2$, the brightness of the sub headlight light source 13Lb is increasing from the first brightness $Q_1$ to the second brightness $Q_2$. Therefore, the illumination range $SH_2$ of the sub headlight light source 13Lb is enlarged. In FIG. 14, a region $SH_2$' enclosed by the broken line indicates an illumination range of the sub headlight light source 13Lb obtained when the sub headlight light source 13Lb lights up with the first brightness $Q_1$. The illumination range $SH_2$ of the sub headlight light source 13Lb is larger than the region $SH_2$' enclosed by the broken line.

Thus, in the motorcycle 10, when the lean angle increases from the reference value $K_2$ to the upper value $U_2$, the cut-off line $LL_2$ of the sub headlight light source 13Lb approaches to the motorcycle 10 along with the increase in the lean angle, but the illumination range $SH_2$ is enlarged along with the increase in the brightness of the sub headlight light source 13Lb from the first brightness $Q_1$ to the second brightness $Q_2$. Thereby, the speed of approach of the cut-off line $LL_2$ to the motorcycle 10 can be reduced.

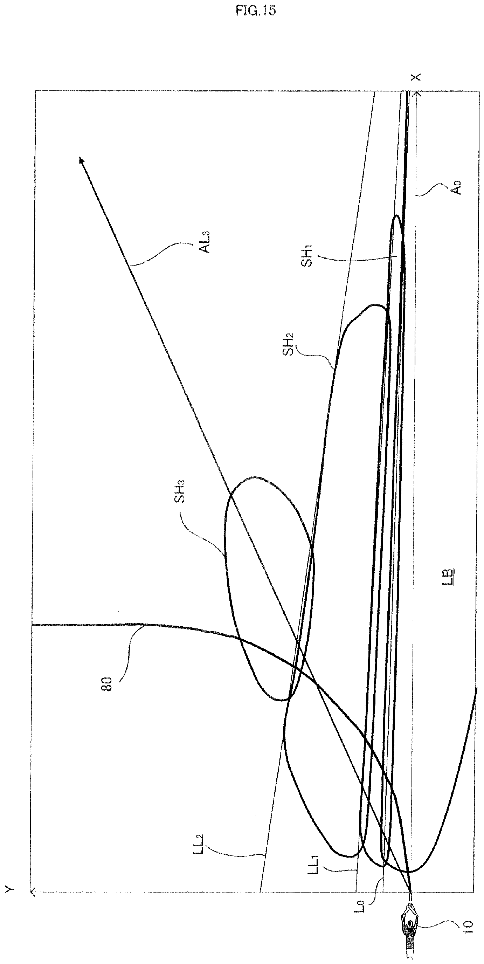

FIG. 15 illustrates a light distribution, schematically showing an illumination range of the headlight produced on a road surface at a time when the lean angle of the motorcycle 10 takes a value that is in the range from the lower value $T_3$ to the reference value $K_3$.

In a state shown in FIG. 15, the lean angle of the motorcycle 10 increases as compared with the state shown in FIG. 14. Therefore, the cut-off line $LL_2$ of the sub headlight light source 13Lb further approaches to the motorcycle 10 as compared with the state shown in FIG. 14. Accordingly, a region on the path 80 covered by the illumination ranges LB, $SH_1$, and $SH_2$ is shortened.

On the other hand, the sub headlight light source 13Lc produces illumination along the optical axis $AL_3$. Therefore, on the path 80, the illumination range $SH_3$ of the sub headlight light source 13Lc covers the cut-off line $LL_2$ of the sub headlight light source 13Lb. Accordingly, the movement of the cut-off line $LL_2$ of the sub headlight light source 13Lb within the rider's field of view is less likely to be conspicuous.

Moreover, a region on the path 80 covered by the illumination range having the illuminance $L_1$ is elongated. The illumination range $SH_3$ of the sub headlight light source 13Lc spreads over the position the rider desires to see.

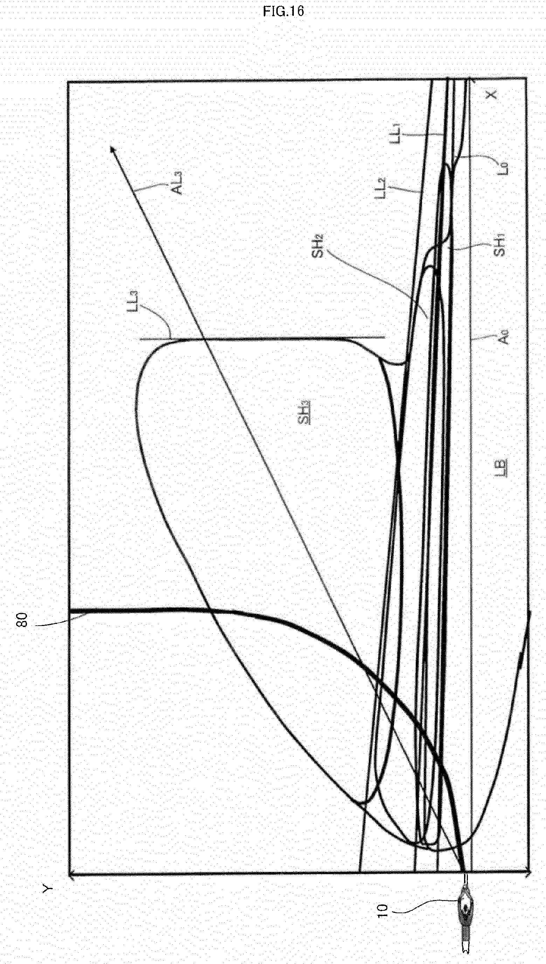

FIG. 16 illustrates a light distribution, schematically showing an illumination range of the headlight produced on a road surface at a time when the lean angle of the motorcycle 10 takes the reference value $K_3$.

In a state shown in FIG. 16, the lean angle of the motorcycle 10 increases as compared with the state shown in FIG. 15. Therefore, the cut-off line $LL_2$ of the sub headlight light source 13Lb further approaches to the motorcycle 10 as compared with the state shown in FIG. 15. Accordingly, the region covered by the illumination range $SH_2$ of the

sub headlight light source 13Lb having the illuminance $L_1$ is further shortened.

On the other hand, the sub headlight light source 13Lc is lighting up with the first brightness $Q_1$, and the brightness of the sub headlight light source 13Lc increases along with the increase in the lean angle. Therefore, the illumination range $SH_3$ is enlarged. As a result, the illumination range $SH_3$ of the sub headlight light source 13Lc still covers the cut-off line $LL_2$ of the sub headlight light source 13Lb on the path 80. Accordingly, the movement of the cut-off line $LL_2$ of the sub headlight light source 13Lb within the rider's field of view is less likely to be conspicuous.

In the state shown in FIG. 16, the lean angle increases as compared with the state shown in FIG. 15, but the brightness of the sub headlight light source 13Lc increases so that a region on the path 80 covered by the illumination range having the illuminance $L_1$ is ensured to the same extent as in the state shown in FIG. 15. As a result, the illumination range $SH_3$ of the sub headlight light source 13Lc spreads over the position the rider desires to see (on the path 80). The cut-off line $LL_3$ of the sub headlight light source 13Lc is located at the side (X side) of the illumination range $SH_3$ to which the motorcycle 10 is advancing. The cut-off line $LL_3$ extends right and left along the width direction of the vehicle (Y direction).

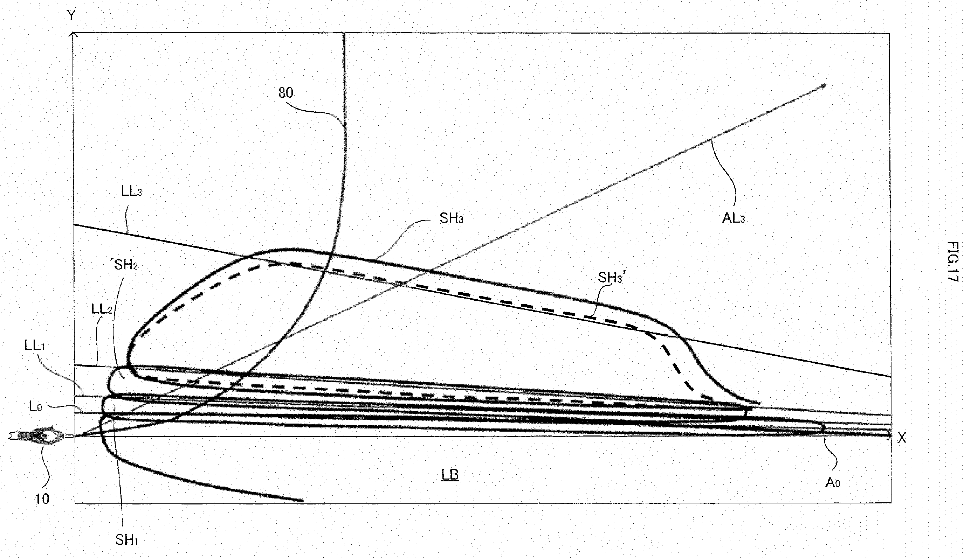

FIG. 17 illustrates a light distribution, schematically showing an illumination range of the headlight produced on a road surface at a time when the lean angle of the motorcycle 10 takes the upper value $U_3$.

In a state shown in FIG. 17, the lean angle of the motorcycle 10 increases as compared with the state shown in FIG. 16. Therefore, the cut-off line $LL_2$ of the sub headlight light source 13Lb further approaches to the motorcycle 10 as compared with the state shown in FIG. 16. The cut-off line $LL_3$ of the sub headlight light source 13Lc also approaches to the motorcycle 10 from the left side of the motorcycle 10.

On the other hand, while the lean angle is increasing from the reference value $K_3$ to the upper value $U_3$, the brightness of the sub headlight light source 13Lc is increasing from the first brightness $Q_1$ to the second brightness $Q_2$. Therefore, the illumination range $SH_3$ of the sub headlight light source 13Lc is enlarged. In FIG. 17, a region $SH_3'$ enclosed by the broken line indicates an illumination range of the sub headlight light source 13Lc obtained when the sub headlight light source 13Lc lights up with the first brightness $Q_1$. The illumination range $SH_3$ of the sub headlight light source 13Lc is larger than the region $SH_3'$ enclosed by the broken line.

Thus, in the motorcycle 10, when the lean angle increases from the reference value $K_3$ to the upper value $U_3$, the cut-off line $LL_3$ of the sub headlight light source 13Lc approaches to the motorcycle 10 along with the increase in the lean angle, but the illumination range $SH_3$ is enlarged along with the increase in the brightness of the sub headlight light source 13Lc from the first brightness $Q_1$ to the second brightness $Q_2$. Thereby, the speed of approach of the cut-off line $LL_3$ to the motorcycle 10 can be reduced.

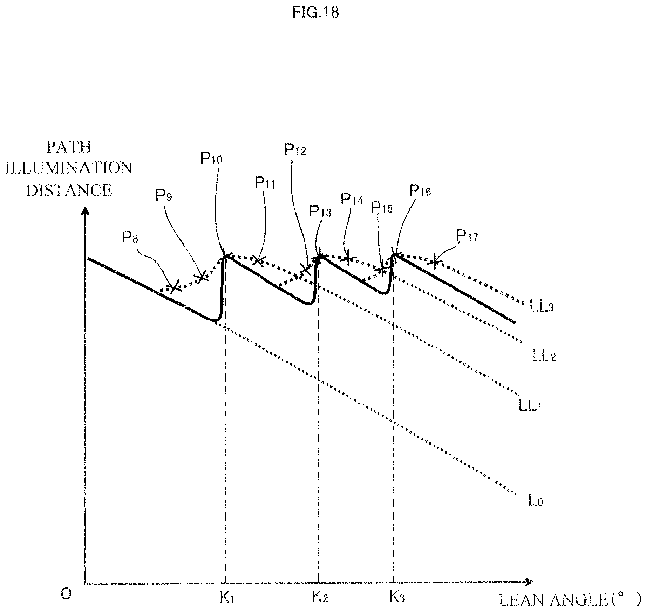

FIG. 18 is a diagram showing the relationship between the lean angle of the motorcycle 10 and an illumination distance of the headlight illuminating the path of the motorcycle 10 according to the first embodiment of the present invention. The points P8 to P17 correspond to situations shown in FIGS. 8 to 17, respectively.

As the motorcycle 10 is inclined to the left so that the lean angle increases from 0°, the cut-off line $L_0$ of the low beam light source 11 L approaches to the motorcycle 10 from the left side of the motorcycle 10. Therefore, a path irradiation range (which means a distance on the path 80 from the motorcycle 10 to the most distal end of the illumination range) becomes shorter along with the increase in the lean angle. Then, when the lean angle exceeds the lower value $T_1$, the sub headlight light source 13La is turned on so that the illumination range $SH_1$ of the sub headlight light source 13La is produced (P8). This extends the path irradiation range. Then, along with the increase in the lean angle, the brightness of the sub headlight light source 13La increases to enlarge the illumination range $SH_1$, thus extending the path irradiation range (P9 to P10).

After the lean angle reaches the reference value $K_1$ (P10), the cut-off line $LL_1$ of the sub headlight light source 13La approaches to the motorcycle 10 along with the increase in the lean angle. On the other hand, the brightness of the sub headlight light source 13La increases from the first brightness $Q_1$ to the second brightness $Q_2$, to enlarge the illumination range $SH_1$. As a result, the speed of movement of the cut-off line $LL_1$ to the motorcycle 10 drops, which suppresses a reduction in the path irradiation range along with the increase in the lean angle (P11).

When the lean angle further increases, the sub headlight light source 13Lb is turned on so that the illumination range $SH_2$ of the sub headlight light source 13Lb is produced. Then, along with the increase in the lean angle, the brightness of the sub headlight light source 13Lb increases to enlarge the illumination range $SH_2$, thus extending the path irradiation range (P12).

After the lean angle reaches the reference value $K_2$ (P13), the cut-off line $LL_2$ of the sub headlight light source 13Lb approaches to the motorcycle 10 along with the increase in the lean angle. On the other hand, the brightness of the sub headlight light source 13Lb increases from the first brightness $Q_1$ to the second brightness $Q_2$, to enlarge the illumination range $SH_2$. As a result, the speed of movement of the cut-off line $LL_2$ to the motorcycle 10 drops, which suppresses a reduction in the path irradiation range along with the increase in the lean angle (P14).

When the lean angle further increases, the sub headlight light source 13Lc is turned on so that the illumination range $SH_3$ of the sub headlight light source 13Lc is produced. Then, along with the increase in the lean angle, the brightness of the sub headlight light source 13Lc increases to enlarge the illumination range $SH_3$, thus extending the

path irradiation range (P15).

After the lean angle reaches the reference value $K_3$ (P16), the cut-off line $LL_3$ of the sub headlight light source 13Lc approaches to the motorcycle 10 along with the increase in the lean angle. On the other hand, the brightness of the sub headlight light source 13Lc increases from the first brightness $Q_1$ to the second brightness $Q_2$, to enlarge the illumination range $SH_3$. As a result, the speed of movement of the cut-off line $LL_3$ to the motorcycle 10 drops, which suppresses a reduction in the path irradiation range along with the increase in the lean angle (P17).

<Second Embodiment>

In the case illustrated in the above-described first embodiment, when the lean angle reaches the reference value K ($K_1$ to $K_3$), the sub headlight light source lights up with the first brightness $Q_1$, and when the lean angle is shifting from the reference value K ($K_1$ to $K_3$) to the upper value U ($U_1$ to $U_3$), the brightness of the sub headlight light source changes from the first brightness $Q_1$ to the second brightness $Q_2$. However, the present invention is not limited to this example. For example, a second embodiment is adoptable.

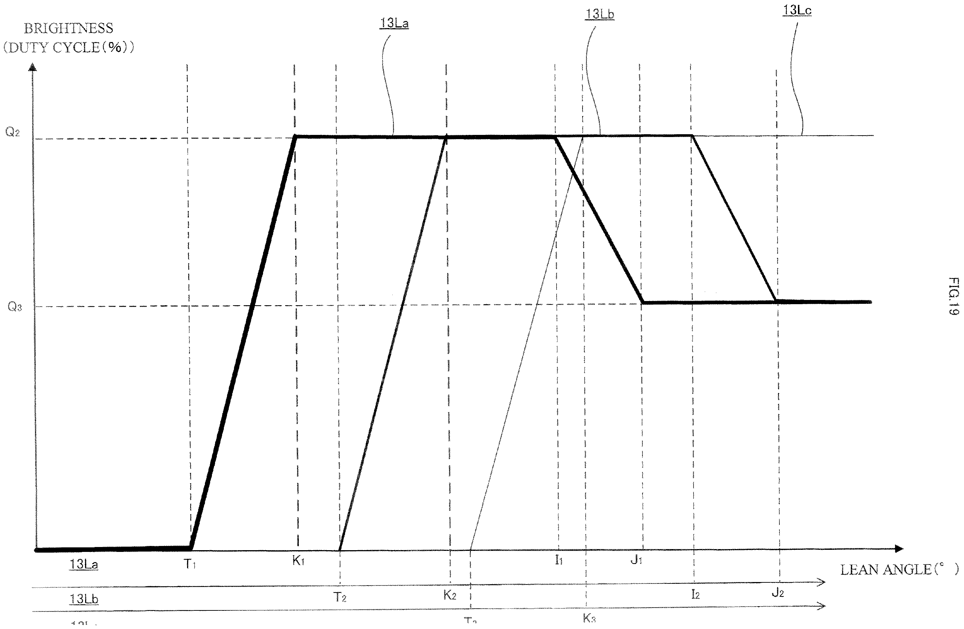

FIG. 19 is a chart showing the relationship between the lean angle of the motorcycle 10 and the brightnesses of the sub headlight light sources 13La to 13Lc according to the second embodiment of the present invention.

In the motorcycle 10 according to the second embodiment of the present invention, the upper value U ($U_1$ to $U_3$) is not set. In the motorcycle 10 according to the second embodiment, as shown in FIG. 19, when the lean angle of the motorcycle 10 reaches the lower value T ($T_1$ to $T_3$), the sub headlight light source 13 (13La to 13Lc) starts to light up, and the brightness of the sub headlight light source 13 (13La to 13Lc) gradually increases in accordance with an increase in the lean angle. When the lean angle of the motorcycle 10 takes the reference value K ($K_1$ to $K_3$), the sub headlight light source 13 (13La to 13Lc) lights up with the second brightness $Q_2$.

When the lean angle is equal to or greater than the reference value K ($K_1$ to $K_3$), the sub headlight light source 13 (13La to 13Lc) lights up in the same manner as in the first embodiment (FIG. 4), except that, at a time point when the lean angle takes the reference value K, the sub headlight light source 13 (13La to 13Lc) lights up with the second brightness $Q_2$. Therefore, a description of the manner will be omitted.

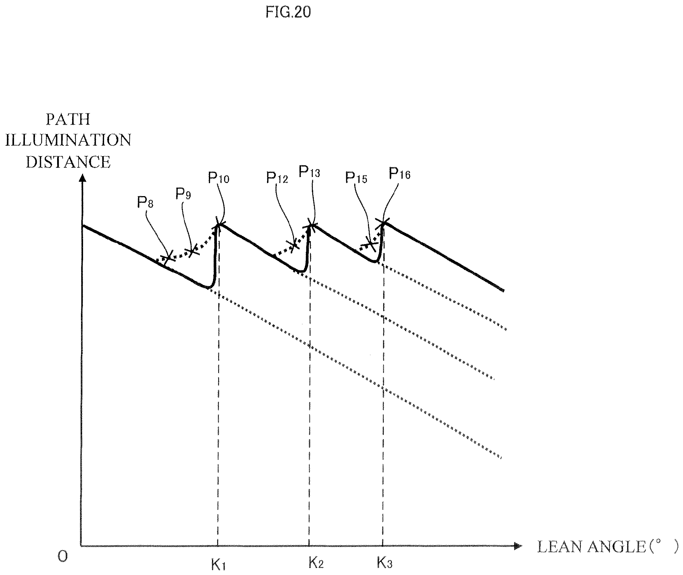

FIG. 20 is a diagram showing the relationship between the lean angle of the motorcycle 10 and the illumination distance of the headlight illuminating the path of the motorcycle 10 according to the second embodiment of the present invention. The points P8, P9, P10, P12, P13, P15, and P16 correspond to situations shown in FIGS. 8, 9, 10, 12, 13, 15, and 16, respectively.

As the motorcycle 10 is inclined to the left so that the lean angle increases from 0°, the cut-off line $L_0$ of the low beam light source 11 L approaches to the motorcycle 10 from the left side of the motorcycle 10. Therefore, the path irradiation range becomes shorter along with the increase in the lean angle. Then, when the lean angle exceeds the lower value $T_1$, the sub headlight light source 13La is turned on so that the illumination range $SH_1$ of the sub headlight light source 13La is produced (P8). This extends the path irradiation range. Then, along with the increase in the lean angle, the brightness of the sub headlight light source 13La increases to enlarge the illumination range $SH_1$, thus extending the path irradiation range (P9). When the lean angle reaches the reference value $K_1$, the sub headlight light source 13La lights up with the second brightness $Q_2$ (P10).

After the lean angle reaches the reference value $K_1$, the cut-off line $LL_1$ of the sub headlight light source 13La approaches to the motorcycle 10 along with the increase in the lean angle. On the other hand, when the lean angle reaches the lower value $T_2$, the sub headlight light source 13Lb is turned on so that the illumination range $SH_2$ of the sub headlight light source 13Lb is produced. Then, along with the increase in the lean angle, the brightness of the sub headlight light source 13Lb increases to enlarge the illumination range $SH_2$, thus extending the path irradiation range (P12). When the lean angle reaches the reference value $K_2$, the sub headlight light source 13Lb lights up with the second brightness $Q_2$ (P13).

After the lean angle reaches the reference value $K_2$, the cut-off line $LL_2$ of the sub headlight light source 13Lb approaches to the motorcycle 10 along with the increase in the lean angle. On the other hand, when the lean angle reaches the lower value $T_3$, the sub headlight light source 13Lc is turned on so that the illumination range $SH_3$ of the sub headlight light source 13Lc is produced. Then, along with the increase in the lean angle, the brightness of the sub headlight light source 13Lc increases to enlarge the illumination range $SH_3$, thus extending the path irradiation range (P15). When the lean angle reaches the reference value $K_3$, the sub headlight light source 13Lc lights up with the second brightness $Q_2$ (P16).

As thus far described, in the motorcycle 10, at a time point when the lean angle reaches the lower value T, the sub headlight light source 13La to 13Lc lights up with a brightness lower than the first brightness $Q_1$ (the second brightness $Q_2$ in the second embodiment), and when the lean angle reaches the reference value K, the sub headlight light source 13La to 13Lc lights up with the first brightness $Q_1$ (the second brightness $Q_2$ in the second embodiment). Accordingly, when the illumination range of the low beam light source 11L or the sub headlight light source 13La or 13Lb that has been already turned on is moving away from the position the rider desires to see, the illumination range of the sub headlight light source 13La to 13Lc that is subsequently turned on can spread over the position the rider desires to see. As a result, the cut-off line $LL_1$ to $LL_3$ of the sub headlight light source 13La to 13Lc that is subsequently turned on is likely to be conspicuous. The illumination range of the sub headlight light source 13La to 13Lc that is subsequently turned on is enlarged along with an increase in the brightness. Therefore, an effect of reducing the speed of approach of the cut-off line $LL_1$ to $LL_3$ to the motorcycle 10 is exerted. This enables suppression of an uncomfortable feeling, which may otherwise be given to the rider.

Since a reduction in the illumination ranges of the sub headlight light sources 13La to 13Lc is suppressed, occurrence of a time period during which the position the rider desires to see is not sufficiently covered by the illumination ranges $SH_1$ to $SH_3$ of the headlight can be suppressed. This enables suppression of an uncomfortable feeling, which may otherwise be given to the rider.

Moreover, when the lean angle is in the range between the lower value T ($T_1$ to $T_3$) and the reference value K ($K_1$ to $K_3$), the sub headlight light source 13La to 13Lc lights up with a brightness lower than the first brightness $Q_1$ (the second brightness $Q_2$ in the second embodiment), and when the lean angle subsequently reaches the reference value K ($K_1$ to $K_3$), the sub headlight light source 13La to 13Lc lights up with the first brightness $Q_1$ (the second brightness $Q_2$ in the second embodiment). This enables suppression of occurrence of a situation where the sub headlight light sources 13La to 13Lc suddenly lights up with a high brightness, which may make the rider feel uncomfortable.

In the motorcycle 10 according to these embodiments, the sub headlight 13 is composed of the sub headlight units 13L and 13R, each of which is provided at each side with respect to the width direction of the vehicle. However, the present invention is not limited to this example. For example, in a possible configuration, the sub headlight units 13L and 13R each provided at each side with respect to the width direction of the vehicle are formed integral with each other, as a single sub headlight unit. In this case, the single sub headlight unit has, at each side thereof with respect to the width direction of the vehicle, a plurality of headlight light sources that generate illumination ranges at one side with respect to the width direction of the vehicle.

These embodiments describe a case where each of the sub headlight units 13L and 13R is a physically integrated unit. However, the present invention is not limited to this example. It may be possible that the sub headlight unit 13L is physically divided into the sub headlight light sources 13La to 13Lc. In this case, it may be possible that these sub headlight light sources 13La to 13Lc are assembled into a single sub headlight unit 13L which is then installed in the motorcycle 10 (vehicle). It may be also possible that each of the sub headlight light sources 13La to 13Lc is individually installed in the motorcycle 10. In this case, the sub headlight light sources 13La to 13Lc, in a state of being installed in the motorcycle 10, constitute a single sub headlight unit 13L.

In these embodiments, the sub headlight units 13L and 13R are members separate from the main headlight 11. However, the present invention is not limited to this example. It may be acceptable that a sub headlight unit is integrated with a main headlight.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in these embodiments, the present invention is not limited to this example. For example, the detection part may include the lean angle sensor 22 while not including the vehicle speed sensor 23. The controller 20 corresponds to a control part of the present invention. However, a hardware configuration of the present invention is not limited to this example. The control part determines whether or not the lean angle of the motorcycle 10 has reached the reference value based on the variables detected by the detection part. At this time, it is not always necessary that the control part calculates the lean angle. No particular limitation is put on details of processing performed in the control part. For example, it may be possible that a memory provided in the controller 20 serving as the control part stores, in the form of data, a table in which the angular velocity (roll rate) and the vehicle speed are associated with a result of whether or not the lean angle has reached a first reference value. In this case, the control part refers to the table based on the angular velocity and the vehicle speed, and thereby can determine whether or not the lean angle has reached the first reference value without calculating the lean angle.

In these embodiments, the lean angle is the angle of inclination of the vehicle body to the inner side of a curve relative to the upright state (vertical direction). However, the present invention is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

These embodiments describe a case where the sub headlight units 13L and 13R are members separate from the control part (controller 20) and the detection part (the lean angle sensor 22 and the vehicle speed sensor 23). However, the present invention is not limited to this example. The sub headlight unit may include at least one of the control part, the communication part, and the detection part.

In these embodiments, three sub headlight light sources are provided at each side of the vehicle with respect to the width direction of the vehicle. In the present invention, however, no particular limitation is put on the number of light sources. It is preferable that the number of sub headlight light sources that illuminate one side of the vehicle with respect to the width direction of the vehicle is at least three.

In these embodiments, each of the sub headlight light sources and the low beam light source is constituted of one light source, and one reference value is set for this one light source. However, in the present invention, the number of light sources that constitute one sub headlight light source or the low beam light source is not particularly limited. For example, it may be acceptable that one sub headlight light source or the low beam light source is constituted of a plurality of light sources and one reference value is set for the plurality of light sources.

These embodiments describe a case where the reference value used when the lean angle increases so that the brightness of the sub headlight light source increases is the same as the reference value used when the lean angle decreases so that the brightness of the sub headlight light source decreases. Instead, these reference values may be different from each other.

These embodiments describe a case where the sub headlight light source is turned on in accordance with the lean angle. However, the present invention is not limited to this example. The sub headlight light source may be configured such that a turn-on function in accordance with the lean angle is manually activated or deactivated. To be specific, it may be possible that the function is manually put into a standby state and, in the standby state, the sub headlight light source is turned on in accordance with the lean angle. In this case as well, the sub headlight light source is turned on not manually but in accordance with the lean angle. In the flasher, on the other hand, flashing/turn-off is manually switched. Also, in the main headlight, the illuminating direction is manually switched. In this manner, the sub headlight light source is different from the flasher and the main headlight.

The sub headlight light source may be also configured such that an instruction for turn-on or turn-off is manually inputted. In such a case, when the instruction is not inputted, the brightness of the sub headlight light source is changed in accordance with the lean angle, while when the instruction is inputted, turn-on or turn-off is performed in accordance with the instruction. For example, when the instruction for turn-on is inputted, the sub headlight light source is turned on irrespective of the lean angle. When the instruction for turn-off is inputted, the sub headlight light source is turned off irrespective of the lean angle. In such a case, the sub headlight system includes an input part (for example, a switch) to which the instruction for turning on or off the sub headlight light source is manually inputted. When the instruction is inputted, the control part turns on or off the sub headlight light source in accordance with the instruction. When the instruction is not inputted, the control part changes the brightness of the sub headlight light source in accordance with the lean angle. In this case as well, the sub headlight light source is different from the flasher and the main headlight, in that a function of turning on the sub headlight light source in accordance with the lean angle is provided.

The sub headlight light source may be configured such that, when the lean angle is equal to or larger than a minimum reference value, the brightness is changed in accordance with the lean angle, while when the lean angle is less than the minimum reference value (for example, at a time of running straight ahead), the brightness is manually changed. In this case as well, the sub headlight light source is different from the flasher and the main headlight, in that a function of turning on the sub headlight light source in accordance with the lean angle is provided.

In the description of this embodiment, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

The above embodiments describe a case where the voltage detector for detecting the supply voltage value of the voltage that is supplied to the sub headlight light source is provided. However, the present invention is not limited to this example. For example, a temperature detector for detecting the temperature of the sub headlight light source or the vicinity thereof may be provided.

In this case, the control part (controller) performs such a control that the brightness of the sub headlight light source increases as the temperature detected by the temperature detector is higher. Alternatively, the control part may perform such a control that the brightness of the sub headlight light source increases in a case where the temperature detected by the temperature detector is equal to or higher than a predetermined temperature. This can correct a reduction in the brightness of the sub headlight light source caused by a temperature rise.

In the present invention, it may be possible that the control part performs a distance information acquisition process and an adjustment process. In the distance information acquisition process, distance information indicating a distance the vehicle has traveled is acquired from a tripmeter or the like. In the adjustment process, the brightness of the sub headlight light source, which changes in accordance with the lean angle of the vehicle, is adjusted based on the distance information. In this case, the control part (controller) performs such a control that the brightness of the sub headlight light source increases as the distance the vehicle has traveled is longer. This can correct a reduction in the brightness of the sub headlight light source caused by a long-term use.

Furthermore, in the present invention, it may be possible that the control part performs a time information acquisition process and an adjustment process. In the time information acquisition process, time information indicating a period of use of the vehicle or the sub headlight light source is acquired. In the adjustment process, the brightness of the sub headlight light source, which changes in accordance with the lean angle of the vehicle, is adjusted based on the time information acquired as a result of the time information acquisition process. In this case, the control part can acquire the time information based on information of the current time, which is obtained by a clock or the like, and information indicating the time and date when the use of the vehicle or the sub headlight light source was started, which is stored in the memory. It may be also possible that the vehicle is configured to acquire, through wireless communication, the time information indicating the period of use of the vehicle or the sub headlight light source from an external storage device (for example, a server) remote from the vehicle. In this case, the control part performs such a control that the brightness of the sub headlight light source increases as the period of use indicated by the time information is longer. This can correct a reduction in the brightness of the sub headlight light source caused by a long-term use.

In the above-described example, the brightness of the sub headlight light source, which changes in accordance with the lean angle, is corrected based on the temperature, the travel distance, and the period of use. In the present invention, when the lean angle of the vehicle is in a range of at least the lower limit value and less than the reference value, such a correction (adjustment process) is performed, while when the lean angle of the vehicle is out of this range, such a correction is not performed. Accordingly, at a time of causing the sub headlight light source to light up with a high brightness, an output of the sub headlight light source can be made without limitation, to make it possible to ensure a wide illumination range.

| 10 | motorcycle (vehicle that leans into turns) |
| 11 | main headlight |
| 11 H | high beam light source |
| 11L | low beam light source |
| 12 | handlebar |
| 13 | sub headlight |
| 13L, 13R | sub headlight unit |
| 13La, 13Lb, 13Lc, 13Ra, 13Rb, 13Rc | sub headlight light source |
| 14L, 14R | flasher |
| 15 | operation switch |
| 16 | front wheel |
| 17 | frontfork |
| 18 | front cover |
| 20 | controller |
| 22 | lean angle sensor |
| 23 | vehicle speed sensor |
| 80 | path |

**Claims**

1.  A sub headlight unit (13L, 13R) for use in a vehicle that leans into turns, wherein
    the sub headlight unit (13L, 13R) includes at least a sub headlight light source (13La, 13Lb, 13Lc, 13Ra, 13Rb, 13Rc) configured to illuminate, at one side with respect to a width direction of the vehicle, an area ahead and outward of the vehicle with respect to the width direction of the vehicle,
    the sub headlight light source (13La, 13Lb, 13Lc, 13Ra, 13Rb, 13Rc) is adapted such that the brightness changes in accordance with a lean angle of the vehicle,
    leaning to the one side with respect to the width direction of the vehicle,
    **characterized in that**
    the sub headlight light source (13La, 13Lb, 13Lc, 13Ra, 13Rb, 13Rc) is adapted as follows:

        the sub headlight light source (13La, 13Lb, 13Lc, 13Ra, 13Rb, 13Rc) is not lighted up for lean angle values lower than a lower value (T1, T2, T3), the lower value (T1, T2, T3) being less than a reference value (K1, K2, K3) that is set for the sub headlight light source (13La, 13Lb, 13Lc, 13Ra, 13Rb, 13Rc),
        the sub headlight light source (13La, 13Lb, 13Lc, 13Ra, 13Rb, 13Rc) is adapted to alit with a brightness gradually increasing in a range lower than a first brightness (Q1) while the lean angle is increased from the lower value (T1, T2, T3) up to, yet preceding the reference value (K1, K2, K3), and
        the brightness of the sub headlight light source (13La, 13Lb, 13Lc, 13Ra, 13Rb, 13Rc) is increased to the first brightness (Q1) when the lean angle is increased to the reference value (K1, K2, K3).

2. The sub headlight unit (13L, 13R) according to claim 1, wherein
   when the lean angle of the vehicle reaches the lower value that is set for the sub headlight light source (13La, 13Lb, 13Lc, 13Ra, 13Rb, 13Rc), an illumination range of the sub headlight light source (13La, 13Lb, 13Lc, 13Ra, 13Rb, 13Rc) is adapted to contain a space above a horizontal line,
   when the lean angle of the vehicle reaches the reference value (K1, K2, K3) that is set for the sub headlight light source (13La, 13Lb, 13Lc, 13Ra, 13Rb, 13Rc), the illumination range of the sub headlight light source (13La, 13Lb, 13Lc, 13Ra, 13Rb, 13Rc) is located in a space below the horizontal line.

3. The sub headlight unit (13L, 13R) according to claim 1 or 2, wherein
   a cut-off line (LL1, LL2, LL3, LR1, LR2, LR3) of the sub headlight light source (13La, 13Lb, 13Lc, 13Ra, 13Rb, 13Rc) obtained when the lean angle of the vehicle reaches the reference value (K1, K2, K3) that is set for the sub headlight light source (13La, 13Lb, 13Lc, 13Ra, 13Rb, 13Rc) is closer to horizontal than the cut-off line (LL1, LL2, LL3, LR1, LR2, LR3) of the sub headlight light source (13La, 13Lb, 13Lc, 13Ra, 13Rb, 13Rc) obtained when the lean angle of the vehicle reaches the lower value that is set for the sub headlight light source (13La, 13Lb, 13Lc, 13Ra, 13Rb, 13Rc).

4. The sub headlight unit (13L, 13R) according to any one of claims 1 to 3, wherein
   the sub headlight light unit comprises a plurality of sub headlight light sources (13La, 13Lb, 13Lc, 13Ra, 13Rb, 13Rc),
   the reference value (K1, K2, K3) and the lower value are individually set for each of the sub headlight light sources (13La, 13Lb, 13Lc, 13Ra, 13Rb, 13Rc).

5. The sub headlight unit (13L, 13R) according to claim 4, wherein
   the reference value of one sub headlight light source (13La, 13Lb, 13Lc, 13Ra, 13Rb, 13Rc) is equal to or smaller than the lower value of another sub headlight light source (13La, 13Lb, 13Lc, 13Ra, 13Rb, 13Rc) for which the next greatest reference value (K1, K2, K3) after that of the one sub headlight light source (13La, 13Lb, 13Lc, 13Ra, 13Rb, 13Rc) is set.

6. The sub headlight unit (13L, 13R) according to any one of claims 1 to 5, wherein
   an optical axis (AL1, AL2, AL3, AR1, AR2, AR3) of the sub headlight light source (13La, 13Lb, 13Lc, 13Ra, 13Rb, 13Rc) is fixed,
   the sub headlight light source (13La, 13Lb, 13Lc, 13Ra, 13Rb, 13Rc) whose optical axis (AL1, AL2, AL3, AR1, AR2, AR3) is fixed lights up with the first brightness (Q1) when the lean angle of the vehicle reaches the reference value (K1, K2, K3) that is set for the sub headlight light source (13La, 13Lb, 13Lc, 13Ra, 13Rb, 13Rc), and lights up with a brightness lower than the first brightness (Q1) in the period from when the lean angle of the vehicle reaches the lower value that is less than the reference value (K1, K2, K3) to when the lean angle of the vehicle reaches the reference value (K1, K2, K3).

7. A sub headlight system for use in a vehicle that leans into turns,
   the sub headlight system comprising:

   the sub headlight unit (13L, 13R) according to any one of claims 1 to 6;
   a control part (20) that is adapted such that it changes the brightness of the sub headlight light source (13La, 13Lb, 13Lc, 13Ra, 13Rb, 13Rc) in accordance with the lean angle of the vehicle; and
   a detection part (22, 23) that is adapted such that it detects a variable available for obtaining the lean angle of the vehicle,
   wherein the control part (20) is adapted to cause the brightness of the sub headlight light source (13La, 13Lb, 13Lc, 13Ra, 13Rb, 13Rc) to increase to the first brightness (Q1), and to cause the brightness of the sub headlight light source (13La, 13Lb, 13Lc, 13Ra, 13Rb, 13Rc) to gradually increase in a range lower than the first brightness (Q1).

8. The sub headlight system according to claim 7, wherein
   the sub headlight system includes a voltage detector that is adapted to detect a supply voltage value of a voltage that is supplied from a battery (26) provided in the vehicle to the sub headlight light source (13La, 13Lb, 13Lc, 13Ra, 13Rb, 13Rc),
   the control part (20) is adapted such that it performs:

   a comparison process for comparing the supply voltage value detected by the voltage detector against a reference voltage value of the battery (26); and

an adjustment process for adjusting, based on a result of the comparison, the brightness of the sub headlight light source (13La, 13Lb, 13Lc, 13Ra, 13Rb, 13Rc) that changes in accordance with the lean angle of the vehicle.

9. The sub headlight system according to claim 8, wherein
when the lean angle of the vehicle is in a range of at least the lower value and less than the reference value (K1, K2, K3), the control part (20) is adapted to perform the adjustment process, while when the lean angle of the vehicle is out of the range, the control part (20) does not perform the adjustment process.

10. A vehicle that leans into turns,
the vehicle comprising the system according to any one of claims 7 to 9.

11. A method to control a sub headlight unit (13L, 13R) for use in a vehicle that leans into turns, with at least a sub headlight light source (13La, 13Lb, 13Lc, 13Ra, 13Rb, 13Rc), wherein the sub headlight light source (13La, 13Lb, 13Lc, 13Ra, 13Rb, 13Rc) illuminates, at one side with respect to a width direction of the vehicle, an area ahead and outward of the vehicle with respect to the width direction of the vehicle,
the brightness of the sub headlight light source (13La, 13Lb, 13Lc, 13Ra, 13Rb, 13Rc) changes in accordance with a lean angle of the vehicle,
**characterized in that**
when the lean angle of the vehicle leaning to the one side with respect to the width direction of the vehicle is increased to a reference value (K1, K2, K3) that is set for the sub headlight light source (13La, 13Lb, 13Lc, 13Ra, 13Rb, 13Rc), the brightness of the sub headlight light source (13La, 13Lb, 13Lc, 13Ra, 13Rb, 13Rc) is increased to a first brightness (Q1), and in a period from when the lean angle of the vehicle is increased from a lower value (T1, T2, T3) that is less than the reference value (K1, K2, K3) up to, yet preceding the reference value (K1, K2, K3), the brightness of the sub headlight light source (13La, 13Lb, 13Lc, 13Ra, 13Rb, 13Rc) gradually increases in a range lower than the first brightness (Q1), and
the sub headlight light source (13La, 13Lb, 13Lc, 13Ra, 13Rb, 13Rc) is not lighted up for lean angle values lower than the lower value (T1, T2, T3).

12. A method to control a sub headlight unit (13L, 13R) for use in a vehicle that leans into turns, with a sub headlight light source (13La, 13Lb, 13Lc, 13Ra, 13Rb, 13Rc) according to claim 11, wherein
when the lean angle of the vehicle reaches the lower value that is set for the sub headlight light source (13La, 13Lb, 13Lc, 13Ra, 13Rb, 13Rc), an illumination range of the sub headlight light source (13La, 13Lb, 13Lc, 13Ra, 13Rb, 13Rc) contains a space above a horizontal line,
when the lean angle of the vehicle reaches the reference value (K1, K2, K3) that is set for the sub headlight light source (13La, 13Lb, 13Lc, 13Ra, 13Rb, 13Rc), the illumination range of the sub headlight light source (13La, 13Lb, 13Lc, 13Ra, 13Rb, 13Rc) is located in a space below the horizontal line.

13. A method to control a sub headlight unit (13L, 13R) for use in a vehicle that leans into turns, with a sub headlight light source (13La, 13Lb, 13Lc, 13Ra, 13Rb, 13Rc) according to claim 12, wherein
a cut-off line (LL1, LL2, LL3, LR1, LR2, LR3) of the sub headlight light source (13La, 13Lb, 13Lc, 13Ra, 13Rb, 13Rc) obtained when the lean angle of the vehicle reaches the reference value (K1, K2, K3) that is set for the sub headlight light source (13La, 13Lb, 13Lc, 13Ra, 13Rb, 13Rc) is closer to horizontal than the cut-off line (LL1, LL2, LL3, LR1, LR2, LR3) of the sub headlight light source (13La, 13Lb, 13Lc, 13Ra, 13Rb, 13Rc) obtained when the lean angle of the vehicle reaches the lower value that is set for the sub headlight light source (13La, 13Lb, 13Lc, 13Ra, 13Rb, 13Rc).

14. A method to control a sub headlight unit (13L, 13R) for use in a vehicle that leans into turns, with a sub headlight light source (13La, 13Lb, 13Lc, 13Ra, 13Rb, 13Rc) according to claim 13, wherein
the sub headlight unit (13L, 13R) comprises a plurality of sub headlight light sources, the reference value (K1, K2, K3) and the lower value are individually set for each sub headlight light source (13La, 13Lb, 13Lc, 13Ra, 13Rb, 13Rc), the reference value (K1, K2, K3) of one sub headlight light source (13La, 13Lb, 13Lc, 13Ra, 13Rb, 13Rc) is equal to or smaller than the lower value of another sub headlight light source (13La, 13Lb, 13Lc, 13Ra, 13Rb, 13Rc) for which the next greatest reference value (K1, K2, K3) after that of the one sub headlight light source (13La, 13Lb, 13Lc, 13Ra, 13Rb, 13Rc) is set.

15. A method to control a sub headlight unit (13L, 13R) for use in a vehicle that leans into turns according to claim 14, wherein
an optical axis (AL1, AL2, AL3, AR1, AR2, AR3) of a sub headlight light source (13La, 13Lb, 13Lc, 13Ra, 13Rb, 13Rc) is fixed,
the sub headlight light source (13La, 13Lb, 13Lc, 13Ra, 13Rb, 13Rc) whose optical axis (AL1, AL2, AL3, AR1, AR2, AR3) is fixed lights up with the first brightness (Q1) when the lean angle of the vehicle reaches the reference value (K1, K2, K3) that is set for the sub headlight light source (13La, 13Lb, 13Lc, 13Ra, 13Rb, 13Rc), and lights up with a brightness lower than the first brightness (Q1) in the period from when the lean angle of the vehicle reaches the lower value that is less than the reference value (K1, K2, K3) to when the lean angle of the vehicle reaches the reference value (K1, K2, K3).

**Patentansprüche**

1. Teil-Scheinwerfereinheit (13L, 13R) zum Einsatz in einem Fahrzeug, das sich in Kurven neigt, wobei
die Teil-Scheinwerfereinheit (13L, 13R) wenigstens eine Teil-Scheinwerfer-Lichtquelle (13La, 13Lb, 13Lc, 13Ra, 13Rb, 13Rc) enthält, die so ausgeführt ist, dass sie an einer Seite in Bezug auf eine Breitenrichtung des Fahrzeugs einen Bereich vor und außerhalb des Fahrzeugs in Bezug auf die Breitenrichtung des Fahrzeugs beleuchtet,
die Teil-Scheinwerfer-Lichtquelle (13La, 13Lb, 13Lc, 13Ra, 13Rb, 13Rc) so eingerichtet ist, dass sich die Helligkeit entsprechend einem Neigungswinkel des Fahrzeugs ändert, das sich zu der einen Seite in Bezug auf die Breitenrichtung des Fahrzeugs neigt,
**dadurch gekennzeichnet, dass**
die Teil-Scheinwerfer-Lichtquelle (13La, 13Lb, 13Lc, 13Ra, 13Rb, 13Rc) wie folgt eingerichtet ist:

die Teil-Scheinwerfer-Lichtquelle (13La, 13Lb, 13Lc, 13Ra, 13Rb, 13Rc) wird für Neigungswinkel unter einem unteren Wert (T1, T2, T3) nicht erleuchtet, wobei der untere Wert (T1, T2, T3) kleiner ist als ein Bezugswert (K1, K2, K3), der für die Teil-Scheinwerfer-Lichtquelle (13La, 13Lb, 13Lc, 13Ra, 13Rb, 13Rc) festgelegt ist,
die Teil-Scheinwerfer-Lichtquelle (13La, 13Lb, 13Lc, 13Ra, 13Rb, 13Rc) ist so eingerichtet, dass sie mit einer Helligkeit leuchtet, die in einem Bereich unter einer ersten Helligkeit (Q1) allmählich zunimmt, wenn der Neigungswinkel von dem unteren Wert (T1, T2, T3) bis auf den Bezugswert (K1, K2, K3), jedoch ihm vorausgehend, vergrößert wird, und
die Helligkeit der Teil-Scheinwerfer-Lichtquelle (13La, 13Lb, 13Lc, 13Ra, 13Rb, 13Rc) auf die erste Helligkeit (Q1) erhöht wird, wenn der Neigungswinkel auf den Bezugswert (K1, K2, K3) vergrößert wird.

2. Teil-Scheinwerfereinheit (13L, 13R) nach Anspruch 1, wobei
wenn der Neigungswinkel des Fahrzeugs den unteren Wert erreicht, der für die Teil-Scheinwerfer-Lichtquelle (13La, 13Lb, 13Lc, 13Ra, 13Rb, 13Rc) festgelegt ist, ein Beleuchtungsbereich der Teil-Scheinwerfer-Lichtquelle (13La, 13Lb, 13Lc, 13Ra, 13Rb, 13Rc) so eingerichtet ist, dass er einen Raum oberhalb einer horizontalen Linie einschließt,
wenn der Neigungswinkel des Fahrzeugs den Bezugswert (K1, K2, K3) erreicht, der für die Teil-Scheinwerfer-Lichtquelle (13La, 13Lb, 13Lc, 13Ra, 13Rb, 13Rc) festgelegt ist, sich der Beleuchtungsbereich der Teil-Scheinwerfer-Lichtquelle (13La, 13Lb, 13Lc, 13Ra, 13Rb, 13Rc) in einem Raum unterhalb der horizontalen Linie befindet.

3. Teil-Scheinwerfereinheit (13L, 13R) nach Anspruch 1 oder 2, wobei
eine Hell-Dunkel-Grenze (LL1, LL2, LL3, LR1, LR2, LR3) der Teil-Scheinwerfer-Lichtquelle (13La, 13Lb, 13Lc, 13Ra, 13Rb, 13Rc), die sich ergibt, wenn der Neigungswinkel des Fahrzeugs den Bezugswert (K1, K2, K3) erreicht, der für die Teil-Scheinwerfer-Lichtquelle (13La, 13Lb, 13Lc, 13Ra, 13Rb, 13Rc) festgelegt ist, näher an der Horizontalen liegt als die Hell-Dunkel-Grenze (LL1, LL2, LL3, LR1, LR2, LR3) der Teil-Scheinwerfer-Lichtquelle (13La, 13Lb, 13Lc, 13Ra, 13Rb, 13Rc), die sich ergibt, wenn der Neigungswinkel des Fahrzeugs den unteren Wert erreicht, der für die Teil-Scheinwerfer-Lichtquelle (13La, 13Lb, 13Lc, 13Ra, 13Rb, 13Rc) festgelegt ist.

4. Teil-Scheinwerfereinheit (13L, 13R) nach einem der Ansprüche 1 bis 3, wobei
die Teil-Scheinwerfereinheit eine Vielzahl von Teil-Scheinwerfer-Lichtquellen (13La, 13Lb, 13Lc, 13Ra, 13Rb, 13Rc) umfasst,
der Bezugswert (K1, K2, K3) und der untere Wert individuell für jede der Teil-Scheinwerfer-Lichtquellen (13La, 13Lb, 13Lc, 13Ra, 13Rb, 13Rc) festgelegt werden.

5. Teil-Scheinwerfereinheit (13L, 13R) nach Anspruch 4, wobei
der Bezugswert einer Teil-Scheinwerfer-Lichtquelle (13La, 13Lb, 13Lc, 13Ra, 13Rb, 13Rc) genauso groß ist wie oder kleiner als der untere Wert einer anderen Teil-Scheinwerfer-Lichtquelle (13La, 13Lb, 13Lc, 13Ra, 13Rb, 13Rc), für die der nächstgrößte Bezugswert (K1, K2, K3) nach dem der einen Teil-Scheinwerfer-Lichtquelle (13La, 13Lb, 13Lc, 13Ra, 13Rb, 13Rc) festgelegt ist.

**6.** Teil-Scheinwerfereinheit (13L, 13R) nach einem der Ansprüche 1 bis 5, wobei
eine optische Achse (AL1, AL2, AL3, AR1, AR2, AR3) der Teil-Scheinwerfer-Lichtquelle (13La, 13Lb, 13Lc, 13Ra, 13Rb, 13Rc) unveränderlich ist,
die Teil-Scheinwerfer-Lichtquelle (13La, 13Lb, 13Lc, 13Ra, 13Rb, 13Rc), deren optische Achse (AL1, AL2, AL3, AR1, AR2, AR3) unveränderlich ist, mit der ersten Helligkeit (Q1) aufleuchtet, wenn der Neigungswinkel des Fahrzeugs den Bezugswert (K1, K2, K3) erreicht, der für die Teil-Scheinwerfer-Lichtquelle (13La, 13Lb, 13Lc, 13Ra, 13Rb, 13Rc) festgelegt ist, und in dem Zeitraum von dem Zeitpunkt, zu dem der Neigungswinkel des Fahrzeugs den unteren Wert erreicht, der kleiner ist als der Bezugswert (K1, K2, K3), bis zu dem Zeitpunkt, zu dem der Neigungswinkel des Fahrzeugs den Bezugswert (K1, K2, K3) erreicht, mit einer Helligkeit aufleuchtet, die schwächer ist als die erste Helligkeit (Q1).

**7.** Teil-Scheinwerfersystem (13L, 13R) zum Einsatz in einem Fahrzeug, das sich in Kurven neigt,
wobei das Teil-Scheinwerfersystem umfasst:

die Teil-Scheinwerfereinheit (13L, 13R) nach einem der Ansprüche 1 bis 6;
einen Steuerungs-Teil (20), der so eingerichtet ist, dass er die Helligkeit der Teil-Scheinwerfer-Lichtquelle (13La, 13Lb, 13Lc, 13Ra, 13Rb, 13Rc) entsprechend dem Neigungswinkel des Fahrzeugs ändert; und
einen Erfassungs-Teil (22, 23), der so eingerichtet ist, dass er eine Variable erfasst, die zum Ermitteln des Neigungswinkels des Fahrzeugs verfügbar ist,
wobei der Steuerungs-Teil (20) so eingerichtet ist, dass er bewirkt, dass die Helligkeit der Teil-Scheinwerfer-Lichtquelle (13La, 13Lb, 13Lc, 13Ra, 13Rb, 13Rc) auf die erste Helligkeit (Q1) zunimmt, und bewirkt, dass die Helligkeit der Teil-Scheinwerfer-Lichtquelle (13La, 13Lb, 13Lc, 13Ra, 13Rb, 13Rc) in einem Bereich unter der ersten Helligkeit (Q1) allmählich zunimmt.

**8.** Teil-Scheinwerfersystem nach Anspruch 7, wobei
das Teil-Scheinwerfersystem einen Spannungs-Detektor enthält, der so eingerichtet ist, dass er einen Versorgungsspannungs-Wert einer Spannung erfasst, die der Teil-Scheinwerfer-Lichtquelle (13La, 13Lb, 13Lc, 13Ra, 13Rb, 13Rc) von einer in dem Fahrzeug vorhandenen Batterie (26) zugeführt wird,
und der Steuerungs-Teil (20) so eingerichtet ist, dass er durchführt:

einen Vergleichs-Prozess, mit dem der durch den Spannungs-Detektor erfasste Versorgungsspannungs-Wert mit einem Bezugsspannungs-Wert der Batterie (26) verglichen wird; und
einen Anpassungs-Prozess, mit dem auf Basis eines Ergebnisses des Vergleichs die Helligkeit der Teil-Scheinwerfer-Lichtquelle (13La, 13Lb, 13Lc, 13Ra, 13Rb, 13Rc) angepasst wird, die sich entsprechend dem Neigungswinkel des Fahrzeugs ändert.

**9.** Teil-Scheinwerfersystem nach Anspruch 8, wobei
der Steuerungs-Teil (20) so eingerichtet ist, dass er, wenn der Neigungswinkel des Fahrzeugs in einem Bereich wenigstens des unteren Wertes und unter dem Bezugswert (K1, K2, K3) liegt, den Anpassungs-Prozess durchführt, während der Steuerungs-Teil (20) den Anpassungs-Prozess nicht durchführt, wenn der Neigungswinkel des Fahrzeugs außerhalb des Bereiches liegt.

**10.** Fahrzeug, das sich in Kurven neigt,
wobei das Fahrzeug das System nach einem der Ansprüche 7 bis 9 umfasst.

**11.** Verfahren zum Steuern einer Teil-Scheinwerfereinheit (13L, 13R) zum Einsatz in einem Fahrzeug, das sich in Kurven neigt, mit wenigstens einer Teil-Scheinwerfer-Lichtquelle (13La, 13Lb, 13Lc, 13Ra, 13Rb, 13Rc), wobei die Teil-Scheinwerfer-Lichtquelle (13La, 13Lb, 13Lc, 13Ra, 13Rb, 13Rc) an einer Seite in Bezug auf eine Breitenrichtung des Fahrzeugs einen Bereich vor und außerhalb des Fahrzeugs in Bezug auf die Breitenrichtung des Fahrzeugs beleuchtet,
und sich die Helligkeit der Teil-Scheinwerfer-Lichtquelle (13La, 13Lb, 13Lc, 13Ra, 13Rb, 13Rc) entsprechend einem Neigungswinkel des Fahrzeugs ändert,
**dadurch gekennzeichnet, dass**
wenn sich der Neigungswinkel des Fahrzeugs, das sich zu der einen Seite in Bezug auf die Breitenrichtung des Fahrzeugs neigt, auf einen Bezugswert (K1, K2, K3) vergrößert wird, der für die Teil-Scheinwerfer-Lichtquelle (13La, 13Lb, 13Lc, 13Ra, 13Rb, 13Rc) festgelegt ist, die Helligkeit der Teil-Scheinwerfer-Lichtquelle (13La, 13Lb, 13Lc, 13Ra, 13Rb, 13Rc) auf eine erste Helligkeit (Q1) erhöht wird, und in einem Zeitraum von dem Zeitpunkt, zu dem der Neigungswinkel des Fahrzeugs von einem unteren Wert (T1, T2, T3), der kleiner ist als der Bezugswert (K1, K2, K3), auf den Bezugswert (K1, K2, K3), jedoch ihm vorausgehend, vergrößert wird, die Helligkeit der Teil-Scheinwerfer-Lichtquelle (13La, 13Lb, 13Lc, 13Ra, 13Rb, 13Rc) in einem Bereich unter der ersten Helligkeit (Q1) allmählich zunimmt, und

die Teil-Scheinwerfer-Lichtquelle (13La, 13Lb, 13Lc, 13Ra, 13Rb, 13Rc) bei Neigungswinkeln unter dem unteren Wert (T1, T2, T3) nicht erleuchtet wird.

12. Verfahren zum Steuern einer Teil-Scheinwerfereinheit (13L, 13R) zum Einsatz in einem Fahrzeug, das sich in Kurven neigt, mit einer Teil-Scheinwerfer-Lichtquelle (13La, 13Lb, 13Lc, 13Ra, 13Rb, 13Rc) nach Anspruch 11, wobei wenn der Neigungswinkel des Fahrzeugs den unteren Wert erreicht, der für die Teil-Scheinwerfer-Lichtquelle (13La, 13Lb, 13Lc, 13Ra, 13Rb, 13Rc) festgelegt ist, ein Beleuchtungsbereich der Teil-Scheinwerfer-Lichtquelle (13La, 13Lb, 13Lc, 13Ra, 13Rb, 13Rc) einen Raum oberhalb einer horizontalen Linie einschließt, wenn der Neigungswinkel des Fahrzeugs den Bezugswert (K1, K2, K3) erreicht, der für die Teil-Scheinwerfer-Lichtquelle (13La, 13Lb, 13Lc, 13Ra, 13Rb, 13Rc) festgelegt ist, sich der Beleuchtungsbereich der Teil-Scheinwerfer-Lichtquelle (13La, 13Lb, 13Lc, 13Ra, 13Rb, 13Rc) in einem Raum unterhalb der horizontalen Linie befindet.

13. Verfahren zum Steuern einer Teil-Scheinwerfereinheit (13L, 13R) zum Einsatz in einem Fahrzeug, das sich in Kurven neigt, mit einer Teil-Scheinwerfer-Lichtquelle (13La, 13Lb, 13Lc, 13Ra, 13Rb, 13Rc) nach Anspruch 12, wobei eine Hell-Dunkel-Grenze (LL1, LL2, LL3, LR1, LR2, LR3) der Teil-Scheinwerfer-Lichtquelle (13La, 13Lb, 13Lc, 13Ra, 13Rb, 13Rc), die sich ergibt, wenn der Neigungswinkel des Fahrzeugs den Bezugswert (K1, K2, K3) erreicht, der für die Teil-Scheinwerfer-Lichtquelle (13La, 13Lb, 13Lc, 13Ra, 13Rb, 13Rc) festgelegt ist, näher an der Horizontalen liegt als die Hell-Dunkel-Grenze (LL1, LL2, LL3, LR1, LR2, LR3) der Teil-Scheinwerfer-Lichtquelle (13La, 13Lb, 13Lc, 13Ra, 13Rb, 13Rc), die sich ergibt, wenn der Neigungswinkel des Fahrzeugs den unteren Wert erreicht, der für die Teil-Scheinwerfer-Lichtquelle (13La, 13Lb, 13Lc, 13Ra, 13Rb, 13Rc) festgelegt ist.

14. Verfahren zum Steuern einer Teil-Scheinwerfereinheit (13L, 13R) zum Einsatz in einem Fahrzeug, das sich in Kurven neigt, mit einer Teil-Scheinwerfer-Lichtquelle (13La, 13Lb, 13Lc, 13Ra, 13Rb, 13Rc) nach Anspruch 13, wobei die Teil-Scheinwerfereinheit eine Vielzahl von Teil-Scheinwerfer-Lichtquellen (13La, 13Lb, 13Lc, 13Ra, 13Rb, 13Rc) umfasst, der Bezugswert (K1, K2, K3) und der untere Wert individuell für jede der Teil-Scheinwerfer-Lichtquellen (13La, 13Lb, 13Lc, 13Ra, 13Rb, 13Rc) festgelegt werden, der Bezugswert (K1, K2, K3) einer Teil-Scheinwerfer-Lichtquelle (13La, 13Lb, 13Lc, 13Ra, 13Rb, 13Rc) genauso groß ist wie oder kleiner als der untere Wert einer anderen Teil-Scheinwerfer-Lichtquelle (13La, 13Lb, 13Lc, 13Ra, 13Rb, 13Rc), für die der nächstgrößte Bezugswert (K1, K2, K3) nach dem der einen Teil-Scheinwerfer-Lichtquelle (13La, 13Lb, 13Lc, 13Ra, 13Rb, 13Rc) festgelegt ist.

15. Verfahren zum Steuern einer Teil-Scheinwerfereinheit (13L, 13R) zum Einsatz in einem Fahrzeug, das sich in Kurven neigt, nach Anspruch 14, wobei eine optische Achse (AL1, AL2, AL3, AR1, AR2, AR3) einer Teil-Scheinwerfer-Lichtquelle (13La, 13Lb, 13Lc, 13Ra, 13Rb, 13Rc) unveränderlich ist, die Teil-Scheinwerfer-Lichtquelle (13La, 13Lb, 13Lc, 13Ra, 13Rb, 13Rc), deren optische Achse (AL1, AL2, AL3, AR1, AR2, AR3) unveränderlich ist, mit der ersten Helligkeit (Q1) aufleuchtet, wenn der Neigungswinkel des Fahrzeugs den Bezugswert (K1, K2, K3) erreicht, der für die Teil-Scheinwerfer-Lichtquelle (13La, 13Lb, 13Lc, 13Ra, 13Rb, 13Rc) festgelegt ist, und in dem Zeitraum von dem Zeitpunkt, zu dem der Neigungswinkel des Fahrzeugs den unteren Wert erreicht, der kleiner ist als der Bezugswert (K1, K2, K3), bis zu dem Zeitpunkt, zu dem der Neigungswinkel des Fahrzeugs den Bezugswert (K1, K2, K3) erreicht, mit einer Helligkeit aufleuchtet, die schwächer ist als die erste Helligkeit (Q1).

## Revendications

1. Unité formant bloc optique auxiliaire (13L, 13R) destinée à une utilisation dans un véhicule qui penche dans les virages,

l'unité formant bloc optique auxiliaire (13L, 13R) incluant au moins une source de lumière pour bloc optique auxiliaire (13La, 13Lb, 13Lc, 13Ra, 13Rb, 13Rc) configurée pour éclairer, sur un côté par rapport à la direction de la largeur du véhicule, une zone en avant et vers l'extérieur par rapport à la direction de la largeur du véhicule,

la source de lumière pour bloc optique auxiliaire (13La, 13Lb, 13Lc, 13Ra, 13Rb, 13Rc) étant conçue de sorte à ce que la luminosité se modifie en fonction de l'angle d'inclinaison du véhicule,

en penchant vers ce côté par rapport à la direction de la largeur du véhicule,

**caractérisée en ce que**

la source de lumière pour bloc optique auxiliaire (13La, 13Lb, 13Lc, 13Ra, 13Rb, 13Rc) est conçue comme suit :

la source de lumière pour bloc optique auxiliaire (13La, 13Lb, 13Lc, 13Ra, 13Rb, 13Rc) n'est pas éclairée pour des valeurs d'angle d'inclinaison inférieures à une valeur inférieure (T1, T2, T3), la valeur inférieure (T1, T2, T3) étant plus petite qu'une valeur de référence (K1, K2, K3) qui est réglée pour la source de lumière pour bloc optique auxiliaire (13La, 13Lb, 13Lc, 13Ra, 13Rb, 13Rc),

la source de lumière pour bloc optique auxiliaire (13La, 13Lb, 13Lc, 13Ra, 13Rb, 13Rc) est conçue pour éclairer avec une luminosité augmentant progressivement dans une plage inférieure à une première luminosité (Q1) alors que l'angle d'inclinaison augmente depuis la valeur inférieure (T1, T2, T3) jusqu'à une valeur précédant la valeur de référence (K1, K2, K3), et

la luminosité de la source de lumière pour bloc optique auxiliaire (13La, 13Lb, 13Lc, 13Ra, 13Rb, 13Rc) augmente jusqu'à la première luminosité (Q1) lorsque l'angle d'inclinaison augmente jusqu'à la valeur de référence (K1, K2, K3).

2. Unité formant bloc optique auxiliaire (13L, 13R) selon la revendication 1, dans laquelle :

lorsque l'angle d'inclinaison du véhicule atteint la valeur inférieure qui est réglée pour la source de lumière pour bloc optique auxiliaire (13La, 13Lb, 13Lc, 13Ra, 13Rb, 13Rc), la plage d'éclairage de la source de lumière pour bloc optique auxiliaire (13La, 13Lb, 13Lc, 13Ra, 13Rb, 13Rc) est conçue pour contenir un espace situé au-dessus d'une ligne horizontale,

lorsque l'angle d'inclinaison du véhicule atteint la valeur de référence (K1, K2, K3) qui est réglée pour la source de lumière pour bloc optique auxiliaire (13La, 13Lb, 13Lc, 13Ra, 13Rb, 13Rc), la plage d'éclairage de la source de lumière pour bloc optique auxiliaire (13La, 13Lb, 13Lc, 13Ra, 13Rb, 13Rc) est située dans un espace situé en dessous de la ligne horizontale.

3. Unité formant bloc optique auxiliaire (13L, 13R) selon la revendication 1 ou la revendication 2, dans laquelle :

une ligne de découpe (LL1, LL2, LL3, LR1, LR2, LR3) de la source de lumière pour bloc optique auxiliaire (13La, 13Lb, 13Lc, 13Ra, 13Rb, 13Rc), obtenue lorsque l'angle d'inclinaison du véhicule atteint la valeur de référence (K1, K2, K3) qui est réglée pour la source de lumière pour bloc optique auxiliaire (13La, 13Lb, 13Lc, 13Ra, 13Rb, 13Rc), est plus proche de l'horizontale que la ligne de découpe (LL1, LL2, LL3, LR1, LR2, LR3) de la source de lumière pour bloc optique auxiliaire (13La, 13Lb, 13Lc, 13Ra, 13Rb, 13Rc), obtenue lorsque l'angle d'inclinaison du véhicule atteint la valeur inférieure qui est réglée pour la source de lumière pour bloc optique auxiliaire (13La, 13Lb, 13Lc, 13Ra, 13Rb, 13Rc).

4. Unité formant bloc optique auxiliaire (13L, 13R) selon l'une quelconque des revendications 1 à 3, dans laquelle :

l'unité d'éclairage du bloc optique auxiliaire comprend une pluralité de sources de lumière pour bloc optique auxiliaire (13La, 13Lb, 13Lc, 13Ra, 13Rb, 13Rc),

la valeur de référence (K1, K2, K3) et la valeur inférieure sont réglées individuellement pour chacune des sources de lumière pour bloc optique auxiliaire (13La, 13Lb, 13Lc, 13Ra, 13Rb, 13Rc).

5. Unité formant bloc optique auxiliaire (13L, 13R) selon la revendication 4, dans laquelle :

la valeur de référence d'une source de lumière pour bloc optique auxiliaire (13La, 13Lb, 13Lc, 13Ra, 13Rb, 13Rc) est inférieure ou égale à la valeur inférieure d'une autre source de lumière pour bloc optique auxiliaire (13La, 13Lb, 13Lc, 13Ra, 13Rb, 13Rc) pour laquelle est réglée la valeur de référence (K1, K2, K3) la plus grande suivante après celle de la première source de lumière pour bloc optique auxiliaire (13La, 13Lb, 13Lc, 13Ra, 13Rb, 13Rc).

6. Unité formant bloc optique auxiliaire (13L, 13R) selon l'une quelconque des revendications 1 à 5, dans laquelle :

l'axe optique (AL1, AL2, AL3, AR1, AR2, AR3) de la source de lumière pour bloc optique auxiliaire (13La, 13Lb, 13Lc, 13Ra, 13Rb, 13Rc) est fixe,

la source de lumière pour bloc optique auxiliaire (13La, 13Lb, 13Lc, 13Ra, 13Rb, 13Rc) dont l'axe optique (AL1, AL2, AL3, AR1, AR2, AR3) est fixe éclaire avec la première luminosité (Q1) lorsque l'angle d'inclinaison du véhicule atteint la valeur de référence (K1, K2, K3) qui est réglée pour la source de lumière pour bloc optique auxiliaire (13La, 13Lb, 13Lc, 13Ra, 13Rb, 13Rc), et elle éclaire avec une luminosité inférieure à la première luminosité (Q1) dans l'intervalle de temps allant du moment où l'angle d'inclinaison du véhicule atteint la valeur inférieure qui est inférieure à la valeur de référence (K1, K2, K3) jusqu'au moment où l'angle d'inclinaison du véhicule atteint la valeur de référence (K1, K2, K3).

7. Système de bloc optique auxiliaire destiné à une utilisation dans un véhicule qui penche dans les virages, le système de bloc optique auxiliaire comprenant :

l'unité formant bloc optique auxiliaire (13L, 13R) conforme à l'une quelconque des revendications 1 à 6, un organe de commande (20) qui est conçu de sorte à modifier la luminosité de la source de lumière pour bloc optique auxiliaire (13La, 13Lb, 13Lc, 13Ra, 13Rb, 13Rc) en fonction de l'angle d'inclinaison du véhicule, et un organe de détection (22, 23) qui est conçu de sorte à détecter une variable disponible pour obtenir l'angle d'inclinaison du véhicule, dans lequel l'organe de commande (20) est conçu pour amener la luminosité de la source de lumière pour bloc optique auxiliaire (13La, 13Lb, 13Lc, 13Ra, 13Rb, 13Rc) à augmenter jusqu'à la première luminosité (Q1), et pour amener la luminosité de la source de lumière pour bloc optique auxiliaire (13La, 13Lb, 13Lc, 13Ra, 13Rb, 13Rc) à augmenter progressivement dans une plage inférieure à la première luminosité (Q1).

8. Système de bloc optique auxiliaire selon la revendication 7, le système de bloc optique auxiliaire incluant un détecteur de tension qui est conçu pour détecter la valeur d'une tension d'alimentation qui est fournie à la source de lumière pour bloc optique auxiliaire (13La, 13Lb, 13Lc, 13Ra, 13Rb, 13Rc) par une batterie (26) prévue dans le véhicule, l'organe de commande (20) est conçu de sorte à effectuer :

un traitement de comparaison destiné à comparer la valeur de tension d'alimentation détectée par le détecteur de tension à la valeur de tension de référence de la batterie (26), et un traitement d'ajustement permettant de régler, sur la base du résultat de la comparaison, la luminosité de la source de lumière pour bloc optique auxiliaire (13La, 13Lb, 13Lc, 13Ra, 13Rb, 13Rc) qui se modifie en fonction de l'angle d'inclinaison du véhicule.

9. Système de bloc optique auxiliaire selon la revendication 8, dans lequel :

lorsque l'angle d'inclinaison du véhicule se trouve dans une plage valant au moins la valeur inférieure et plus petite que la valeur de référence (K1, K2, K3), l'organe de commande (20) est conçu pour effectuer le traitement d'ajustement, alors que, lorsque l'angle d'inclinaison du véhicule est hors plage, l'organe de commande (20) n'effectue pas le traitement d'ajustement.

10. Véhicule penchant dans les virages, le véhicule comprenant le système conforme à l'une quelconque des revendications 7 à 9.

11. Procédé de commande d'une unité formant bloc optique auxiliaire (13L, 13R) destinée à une utilisation dans un véhicule qui penche dans les virages, comportant au moins une source de lumière pour bloc optique auxiliaire (13La, 13Lb, 13Lc, 13Ra, 13Rb, 13Rc), la source de lumière pour bloc optique auxiliaire (13La, 13Lb, 13Lc, 13Ra, 13Rb, 13Rc) éclairant, sur un côté par rapport à la direction de la largeur du véhicule, une zone en avant et vers l'extérieur du véhicule par rapport à la direction de la largeur du véhicule, dans lequel luminosité de la source de lumière pour bloc optique auxiliaire (13La, 13Lb, 13Lc, 13Ra, 13Rb, 13Rc) se modifie en fonction de l'angle d'inclinaison du véhicule, **caractérisé en ce que :**

lorsque l'angle d'inclinaison du véhicule penchant sur le premier côté par rapport à la direction de la largeur du véhicule augmente jusqu'à une valeur de référence (K1, K2, K3) qui est réglée pour la source de lumière pour bloc optique auxiliaire (13La, 13Lb, 13Lc, 13Ra, 13Rb, 13Rc), la luminosité de la source de lumière pour bloc optique auxiliaire (13La, 13Lb, 13Lc, 13Ra, 13Rb, 13Rc) augmente jusqu'à une première luminosité (Q1), et dans un intervalle de temps allant du moment où l'angle d'inclinaison du véhicule augmente à partir d'une valeur inférieure (T1, T2, T3) qui est plus petite que la valeur de référence (K1, K2, K3) jusqu'à une valeur précédant la valeur de référence (K1, K2, K3), la luminosité de la source de lumière pour bloc optique auxiliaire (13La, 13Lb, 13Lc, 13Ra, 13Rb, 13Rc) augmente progressivement dans une plage inférieure à la première luminosité (Q1), et la source de lumière pour bloc optique auxiliaire (13La, 13Lb, 13Lc, 13Ra, 13Rb, 13Rc) n'est pas éclairée pour des valeurs d'angle d'inclinaison inférieures à la valeur inférieure (T1, T2, T3).

**12.** Procédé de commande d'une unité formant bloc optique auxiliaire (13L, 13R) destinée à une utilisation dans un véhicule qui penche dans les virages, comportant une source de lumière pour bloc optique auxiliaire (13La, 13Lb, 13Lc, 13Ra, 13Rb, 13Rc) selon la revendication 11, dans lequel :

lorsque l'angle d'inclinaison du véhicule atteint la valeur inférieure qui est réglée pour la source de lumière pour bloc optique auxiliaire (13La, 13Lb, 13Lc, 13Ra, 13Rb, 13Rc), la plage d'éclairage de la source de lumière pour bloc optique auxiliaire (13La, 13Lb, 13Lc, 13Ra, 13Rb, 13Rc) contient un espace situé au-dessus d'une ligne horizontale,
lorsque l'angle d'inclinaison du véhicule atteint la valeur de référence (K1, K2, K3) qui est réglée pour la source de lumière pour bloc optique auxiliaire (13La, 13Lb, 13Lc, 13Ra, 13Rb, 13Rc), la plage d'éclairage de la source de lumière pour bloc optique auxiliaire (13La, 13Lb, 13Lc, 13Ra, 13Rb, 13Rc) est située dans un espace en dessous de la ligne horizontale.

**13.** Procédé de commande d'une unité formant bloc optique auxiliaire (13L, 13R) destinée à une utilisation dans un véhicule qui penche dans les virages, comportant une source de lumière pour bloc optique auxiliaire (13La, 13Lb, 13Lc, 13Ra, 13Rb, 13Rc) selon la revendication 12, dans lequel :

la ligne de découpe (LL1, LL2, LL3, LR1, LR2, LR3) de la source de lumière pour bloc optique auxiliaire (13La, 13Lb, 13Lc, 13Ra, 13Rb, 13Rc), obtenue lorsque l'angle d'inclinaison du véhicule atteint la valeur de référence (K1, K2, K3) qui est réglée pour la source de lumière pour bloc optique auxiliaire (13La, 13Lb, 13Lc, 13Ra, 13Rb, 13Rc), est plus proche de l'horizontale que la ligne de découpe (LL1, LL2, LL3, LR1, LR2, LR3) de la source de lumière pour bloc optique auxiliaire (13La, 13Lb, 13Lc, 13Ra, 13Rb, 13Rc) obtenue lorsque l'angle d'inclinaison du véhicule atteint la valeur inférieure qui est réglée pour la source de lumière pour bloc optique auxiliaire (13La, 13Lb, 13Lc, 13Ra, 13Rb, 13Rc).

**14.** Procédé de commande d'une unité formant bloc optique auxiliaire (13L, 13R) destinée à une utilisation dans un véhicule qui penche dans les virages, comportant une source de lumière pour bloc optique auxiliaire (13La, 13Lb, 13Lc, 13Ra, 13Rb, 13Rc) selon la revendication 13, dans lequel :

l'unité formant bloc optique auxiliaire (13L, 13R) comprend une pluralité de sources de lumière pour bloc optique auxiliaire (13La, 13Lb, 13Lc, 13Ra, 13Rb, 13Rc), la valeur de référence (K1, K2, K3) et la valeur inférieure étant réglées individuellement pour chaque source de lumière pour bloc optique auxiliaire (13La, 13Lb, 13Lc, 13Ra, 13Rb, 13Rc),
la valeur de référence d'une source de lumière pour bloc optique auxiliaire (13La, 13Lb, 13Lc, 13Ra, 13Rb, 13Rc) est inférieure ou égale à la valeur inférieure d'une autre source de lumière pour bloc optique auxiliaire (13La, 13Lb, 13Lc, 13Ra, 13Rb, 13Rc) pour laquelle est réglée la valeur de référence (K1, K2, K3) la plus grande suivante après celle de la première source de lumière pour bloc optique auxiliaire (13La, 13Lb, 13Lc, 13Ra, 13Rb, 13Rc).

**15.** Procédé de commande d'une unité formant bloc optique auxiliaire (13L, 13R) destinée à une utilisation dans un véhicule qui penche dans les virages selon la revendication 14, dans lequel :

l'axe optique (AL1, AL2, AL3, AR1, AR2, AR3) de la source de lumière pour bloc optique auxiliaire (13La, 13Lb, 13Lc, 13Ra, 13Rb, 13Rc) est fixe,
la source de lumière pour bloc optique auxiliaire (13La, 13Lb, 13Lc, 13Ra, 13Rb, 13Rc) dont l'axe optique (AL1, AL2, AL3, AR1, AR2, AR3) est fixe éclaire avec la première luminosité (Q1) lorsque l'angle d'inclinaison du véhicule atteint la valeur de référence (K1, K2, K3) qui est réglée pour la source de lumière pour bloc optique auxiliaire (13La, 13Lb, 13Lc, 13Ra, 13Rb, 13Rc), et elle éclaire avec une luminosité inférieure à la première luminosité (Q1) dans l'intervalle de temps allant du moment où l'angle d'inclinaison du véhicule atteint la valeur inférieure qui est plus petite que la valeur de référence (K1, K2, K3) jusqu'au moment où l'angle d'inclinaison du véhicule atteint la valeur de référence (K1, K2, K3).

FIG.1

FIG.2

Block diagram (10) including:
- MAIN HEADLIGHT (11): HIGH BEAM LIGHT SOURCE (11H), LOW BEAM LIGHT SOURCE (11L)
- LEFT FLASHER (14L)
- RIGHT FLASHER (14R)
- (20)
- SUB HEADLIGHT LIGHT SOURCE (13La), SUB HEADLIGHT LIGHT SOURCE (13Lb), SUB HEADLIGHT LIGHT SOURCE (13Lc) — (13L)
- SUB HEADLIGHT LIGHT SOURCE (13Ra), SUB HEADLIGHT LIGHT SOURCE (13Rb), SUB HEADLIGHT LIGHT SOURCE (13Rc) — (13R)
- CONTROLLER
- ANSWERBACK MAIN UNIT (COMMUNICATION DEVICE / CONTROL UNIT) (21)
- REMOTE CONTROL KEY (25)
- BEAM SWITCH, FLASHER SWITCH (15)
- LEAN ANGLE SENSOR (22)
- VEHICLE SPEED SENSOR (23)
- POWER SOURCE (26)
- 15B, 15F

FIG.3

FIG.4

FIG.5

(a)

(b)

(c)

FIG.6

(a)

(b)

(c)

FIG.7

(a)

(b)

FIG.8

FIG.9

FIG.10

FIG.11

FIG.12

FIG.13

FIG.14

FIG.15

FIG.16

FIG.17

FIG.18

FIG.19

EP 2 657 080 B1

BRIGHTNESS
(DUTY CYCLE(%))

13La      13Lb      13Lc

Q₂

Q₃

13La    T₁    K₁    I₁    J₁    LEAN ANGLE(°)

13Lb    T₂    K₂    I₂    J₂

T₃    K₃

FIG.20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010061651 A

- US 20050270785 A